# NEUE EUROPÄISCHE PATENTSCHRIFT

(11) **EP 3 283 917 B2**
(45) Veröffentlichungstag und Bekanntmachung des Hinweises auf die Entscheidung über den Einspruch: **25.02.2026**
(45) Hinweis auf die Patenterteilung: 30.11.2022
(21) Anmeldenummer: 16719278.0
(22) Anmeldetag: 13.04.2016
(51) Int. Cl.: G02B 21/06, G02B 21/00, G02B 21/16

(54) **VERFAHREN UND VORRICHTUNG ZUM UNTERSUCHEN EINER PROBE**
METHOD AND DEVICE FOR EXAMINATION OF A SAMPLE
PROCÉDÉ ET DISPOSITIF D'ANALYSE D'UN ÉCHANTILLON

(30) Priorität: 13.04.2015 DE 102015105624
(43) Veröffentlichungstag der Anmeldung: 21.02.2018
(60) Teilanmeldung: 22210375.6
(73) Patentinhaber: Leica Microsystems CMS GmbH, 35578 Wetzlar (DE)
(72) Erfinder: FAHRBACH, Florian, 68167 Mannheim (DE); KNEBEL, Werner, 76709 Kronau (DE)
(74) Vertreter: Grünecker Patent- und Rechtsanwälte PartG mbB
(86) Internationale Anmeldenummer: PCT/EP2016/058107
(87) Internationale Veröffentlichungsnummer: WO 2016/166151

(56) Entgegenhaltungen:
- EP-B1- 1 787 157
- DE-A1- 10 257 423
- DE-A1- 102007 017 598
- DE-A1- 102011 000 835
- US-A1- 2011 084 217
- US-A1- 2011 115 895
- D6: Bestätigung des Vortragenden und Folie aus der Präsentation „3D cancer cell morphodynamics revealed by high-resolution light- sheet microscopy“, gehalten am 31.03.2015 auf der FOM 2015 in Göttingen
- D8 - EUAN MCLEOD: "RESEARCH:TUNABLEACOUSTICGRADIENT-INDEXLENSES", [retrieved on 20250120]; (no date to be found)
- https://wp:optics.arizona:edu/emcleod/tunable-acoustic-gradient-index-lenses/
- EUGEN BAUMGART ET AL: "Scanned light sheet microscopy with confocal slit detection", OPTICS EXPRESS, vol. 20, no. 19, 10 September 2012 (2012-09-10), pages 21805 - 21814, XP055093819, ISSN: 1094-4087, DOI: 10.1364/OE.20.021805

## Beschreibung

Die Erfindung betrifft ein Verfahren zum Untersuchen einer Probe, bei dem eine Probe in einer Beleuchtungsebene entlang eines Beleuchtungsstreifens mit einem Beleuchtungslichtbündel, das sich entlang des Beleuchtungsstreifens ausbreitet, beleuchtet wird und bei dem der Beleuchtungsstreifen in eine Detektionsebene abgebildet wird, indem von dem Beleuchtungsstreifen ausgehendes Detektionslicht in die Detektionsebene fokussiert wird, und bei dem das Detektionslicht mit einem Detektor detektiert wird.

Die Erfindung betrifft außerdem eine Vorrichtung zum Ausführen eines solchen Verfahrens und insbesondere eine Vorrichtung zum Untersuchen einer Probe mit einer Beleuchtungsvorrichtung, die eine Probe in einer Beleuchtungsebene entlang eines Beleuchtungsstreifens mit einem Beleuchtungslichtbündel beleuchtet, das sich entlang des Beleuchtungsstreifens ausbreitet, und mit einer Detektionsoptik, die ein Detektionsobjektiv aufweist und die das von dem Beleuchtungsstreifen ausgehende Detektionslicht in eine Detektionsebene, in der ein Detektor angeordnet ist, fokussiert und so den Beleuchtungsstreifen auf den Detektor abbildet.

Die SPIM-Technik (Single Plane Illumination Microscopy), bei der eine schichtweise Beleuchtung der Probe erfolgt, erlaubt eine schnellere und probenschonendere Erfassung von Bilddaten, als beispielsweise bei einer punktweisen Abtastung einer Probe. Ein bekanntes Einsatzgebiet der SPIM-Technologie ist der Bereich der Fluoreszenz-Mikroskopie, wobei Fluorophore in der Probe mit Laserlicht angeregt werden. Bei der SPIM-Technologie findet hierbei eine Anregung nur in einer von einem Beleuchtungslichtblatt statt. Eine Schädigung der Probe durch Beleuchtungslicht in anderen Ebenen ist hierdurch vermieden.

Eine nach dem SPIM-Verfahren arbeitende optische Vorrichtung ist in DE 102 57 423 A1 beschrieben. Bei diesem Mikroskop wird eine Probe mit einem dünnen Lichtblatt beleuchtet, während die Beobachtung senkrecht zu der Ebene des beleuchtenden Lichtblattes erfolgt. Hierbei erfolgen die Beleuchtung und die Detektion über zwei separate optische Strahlengänge mit jeweils separater Optik, insbesondere mit zwei separaten, zueinander senkrechten Objektiven.

Aus DE 10 2007 017 598 A1 ist ein Verfahren und eine Anordnung zum Positionieren eines Lichtblattes in der Fokusebene für eine Untersuchung einer Probe nach der Methode der Selective-Plane-Illumination-Microscopy (SPIM) bekannt. Das Verfahren beinhaltet ein Abbilden einer mit dem Lichtblatt einen Winkel im Bereich von größer 0° und kleiner 90° einschließenden zweiten Fokusebene auf einen ortsauflösenden Detektor und das Ermitteln der Ist-Position des maximalen Kontrastes oder der maximalen Intensität in der Abbildung der zweiten Fokusebene, wobei die Ist-Position dem Schnittpunkt des Lichtblattes mit der zweiten Fokusebene entspricht. Anschließend erfolgt ein- Bestimmen des Abstandes zwischen der Ist-Position und der Soll-Position des maximalen Kontrastes oder der maximalen Intensität in dieser Abbildung, wobei die Soll-Position dem Schnittpunkt der beiden Fokusebenen entspricht. Schließlich erfolgt ein Verschieben des Lichtblattes oder der Detektionsoptik, bis der Abstand zwischen der Ist-Position und der Soll-Position gleich Null ist.

Aus DE 10 2009 044 983 A1 ist ein Mikroskop bekannt, das eine Beleuchtungseinrichtung aufweist, mit der ein Lichtblatt zur Beleuchtung eines Probenbereichs erzeugt wird, welches in Richtung einer Beleuchtungsachse eines Beleuchtungsstrahlenganges und in Richtung einer Querachse, welche quer zur Beleuchtungsachse liegt, annähernd flächig ausgedehnt ist. Das Mikroskop weist außerdem eine Detektierungseinrichtung auf, mit der Licht detektiert wird, welches entlang einer Detektierungsachse eines Detektierungsstrahlengangs aus dem Probenbereich abgestrahlt wird, wobei Beleuchtungsachse und Detektierungsachse sowie Querachse und Detektierungsachse in einem von Null verschiedenen Winkel aufeinander stehen, und wobei die Detektierungseinrichtung außerdem im Detektierungsstrahlengang ein Detektierungsobjektiv umfasst. Bei einem solchen Mikroskop umfasst die Detektierungseinrichtung außerdem ein von einer Frontlinse des Detektierungsobjektivs räumlich getrennt angeordnetes und von dieser unabhängig verstellbares optisches Detektierungselement, mittels dessen die Größe eines Detektierungsbildfeldes stufenlos variierbar ist, und/oder mittels dessen eine Detektierungsfokusebene im Probenbereich stufenlos verschiebbar ist.

Aus Dean, K. & Fiolka, R., "Uniform and scalable light-sheets generated by extended focusing", Opt. Express 22, 26141-26152 (2014), ist ein System bekannt, bei dem ein dünner, kurzer Beleuchtungsstrahl mit einer schnell durchstimmbaren Linse entlang der optischen Achse vor und zurück geschoben wird. Durch die geringere Schärfentiefe des Strahls kann dieser dünner sein, was den Bildkontrast steigern soll. Da allerdings auch im Out-of-focus-Bereich des Strahls Fluoreszenz anregt wird, wird eine Schlitzblende verwendet, um den gewünschten Effekt zu erreichen. Diese Schlitzblende verläuft in einer konjugierten Ebene im Detektionsstrahlengang kollinear mit dem Beleuchtungsstrahl. Trotz der Nutzung der Schlitzblende fällt die Steigerung des Bildkontrastes relativ klein aus, insbesondere weil viel Fluoreszenzlicht detektiert wird, das nicht vom Fokus des Beleuchtungsstrahls angeregt wurde.

Aus Zong, W. et al. "Large-field high-resolution two-photon digital scanned light-sheet microscopy" Cell Res. (2014), ist ein ähnliches Mikroskop bekannt, wobei dort allerdings eine nichtlineare Fluoreszenz-Anregung erfolgt. Auch in CN 104407436 ist ein solches Mikroskop beschrieben.

In Gao, L., "Extend the field of view of selective plan illumination microscopy by tiling the excitation light sheet", Opt. Express, 23, 6102-6111 (2015), ist offenbart, das durch einen gescannten Beleuchtungsstrahl erzeugte Lichtblatt in mehreren, diskreten Schritten entlang der Beleuchtungsachse zu verschieben und dann die für jeden Schritt einzeln erhaltenen Bilder zusammenzufügen. Diese Methode hat den Nachteil, dass es lange dauert mehrere Einzelbilder nacheinander aufzunehmen. Des Weiteren ist die effektive Dicke des beleuchteten Bereichs nicht gleichförmig über das Bildfeld entlang der Ausbreitungsrichtung des Beleuchtungsstrahls. Das Beleuchtungsstrahlbündel (Beleuchtungslichtbündel) ist in der Mitte der einzelnen Bilder immer dünner als am Rand. Das aus Einzelbildern zusammengesetzte Bild besteht also abwechselnd aus Bereichen die mit dünnerem und dickerem Lichtbündel beleuchtet wurden, also mit höherem und niedrigerem Kontrast.

Es ist eine Aufgabe der vorliegenden Erfindung, ein Verfahren zum Untersuchen einer Probe anzugeben, das es ermöglicht, kontrastreichere Bilder zu erzeugen.

Die Aufgabe wird durch ein Verfahren nach Anspruch 1 gelöst.

Es ist eine weitere Aufgabe der vorliegenden Erfindung, eine Vorrichtung zum Untersuchen einer Probe anzugeben, die es ermöglicht, kontrastreichere Bilder zu erzeugen.

Die Aufgabe wird durch eine Vorrichtung gelöst, die die Merkmale des Anspruchs 16 aufweist.

In erfindungsgemäßer Weise wurde erkannt, dass die statische Beleuchtung mit einem Lichtblatt dessen Fokus in der Mitte des Bildfeldes angeordnet ist und dessen Schärfentiefe an die Größe des Bildfeldes entlang der Beleuchtungsachse angepasst ist dazu führt, dass die Dicke des Strahlenbündels größer ist als notwendig wenn lediglich kleinere, insbesondere nicht zentral liegende, Ausschnitte aus dem Bildbereich von Interesse sind. In erfindungsgemäßer Weise wurde insbesondere erkannt, dass im Stand der Technik stets ein Lichtblatt verwendet wird, das dicker ist, als es zur Beleuchtung des kleinen interessierenden Ausschnittes notwendig wäre.

Wie weiter unten noch im Detail erläutert ist, ermöglicht es die vorliegende Erfindung, stets ein dünneres Beleuchtungslichtbündel, insbesondere ein dünneres Lichtblatt, zur Beleuchtung des jeweils interessierenden Bereichs zu verwenden und dies im Hinblick auf die Erzeugung kontrastreicherer Bilder auszunutzen. Dies kann insbesondere dadurch realisiert sein, dass das Beleuchtungslichtbündel stärker fokussiert wird, was einen dünneren und in Lichtausbreitungsrichtung kürzeren Fokusbereich, jedoch auch ein größere Dicke des Beleuchtungslichtbündels außerhalb des Fokusbereichs zur Folge hat, wobei allerdings ausschließlich das Detektionslicht, das dem Fokusbereich entstammt, auf Grund der besonderen Ausrichtung des Spaltdetektors detektiert wird. Durch Verschieben des Fokusbereichs innerhalb der Beleuchtungsebene und/oder innerhalb der Probe, kann auch ein größeres interessierendes Areal der Probe sukzessive kontrastreich abgebildet werden.

Der Spaltdetektor kann in unterschiedlicher Weise realisiert sein.

Beispielsweise kann der Spaltdetektor Teil eines Flächendetektors sein. Insbesondere kann vorteilhaft vorgesehen sein, dass der Spaltdetektor der jeweils aktiv geschaltete Teil eines in der Detektionsebene angeordneten Flächendetektors, beispielsweise eines CMOS-Detektors oder sCMOS-Detektors, ist. Es ist beispielsweise vorteilhaft möglich, lediglich einen Teil des Flächendetektors, nämlich den Teil, der gerade dem Spaltdetektor entspricht, auszulesen (aktiv geschalteter Teil), während die übrigen Teile des Flächendetektors, nämlich die Teile, die außerhalb des Spaltdetektors liegen, nicht ausgelesen werden (nicht aktiv geschalteter Teil).

Bei einer solchen Ausführung sind mechanische Bauteile, wie beispielsweise eine Spaltblende, vermieden, was insbesondere von Vorteil ist, wenn es darum geht, den Spaltdetektor in der Detektionsebene zu verschieben. Bei einer solchen Ausführung kann nämlich der Flächendetektor, insbesondere relativ zum Detektionsobjektiv und/oder zum Beleuchtungsobjektiv und/oder zur Probe und oder relativ zum einfallenden Detektionslicht, ortsfest bleiben, wobei zeitlich nacheinander unterschiedliche Teile der Sensorfläche des Flächendetektors, die dann jeweils den Spaltdetektor bilden, aktiv geschaltet werden derart, dass jeweils ausschließlich das auf den aktiv geschalteten Teil fallende Detektionslicht detektiert wird, während Detektionslicht, das auf die jeweils inaktiv geschalteten Teile des Flächendetektors fällt, nicht detektiert wird.

Wenn die jeweils zeitlich unmittelbar nacheinander aktiv geschalteten Teile des Flächendetektors jeweils räumlich unmittelbar nebeneinander liegen, resultiert im Ergebnis eine räumlich ununterbrochener Bewegung des Spaltdetektors, ohne dass hierfür mechanische Bauteile bewegt werden müssen. Konkret kann beispielsweise Bereich aktiv geschalteter Pixel gleichförmig und synchron zum Beleuchtungsstrahl den Sensor entlang laufen. Insoweit hat eine solche Ausführung den besonderen Vorteil einer großen Langlebigkeit, weil ein bewegungsbedingter Verschleiß, beispielsweise von mechanischen Blendenden, vermieden ist.

Der Spaltdetektor wird in der Detektionsebene bewegt. Insbesondere kann vorteilhaft vorgesehen sein, dass der Spaltdetektor in der Detektionsebene in Spaltbreitenrichtung bewegt wird und/oder dass Spaltdetektor durch sukzessives Aktiv-Schalten und Inaktiv-Schalten jeweils benachbarter Teile des Flächendetektors in der Detektionsebene bewegt wird. Bei einer ganz besonders vorteilhaften Ausführung ist vorgesehen, dass die zeitlich nacheinander aktiv geschalteten Teile des Flächendetektors jeweils überlappen. Dies ist deshalb besonders vorteilhaft, weil dies eine gleichförmige Bewegung des Lichtblatts entlang der Beleuchtungsrichtung ermöglicht. Dies führt auch zu einer über das gesamte Bildfeld gleichen effektiven Dicke des beleuchteten Bereichs.

Bei einer besonderen Ausführung wird der Spaltdetektor in der Detektionsebene durch sukzessives Aktiv-Schalten und Inaktiv-Schalten jeweils benachbarter Teile eines Flächendetektors in Spaltbreitenrichtung, bewegt. Hierbei kann, was weiter unten noch im Detail erläutert wird, insbesondere vorgesehen sein, dass der Spaltdetektor einerseits und das Beleuchtungslichtbündel und/oder die Position des Fokus des Beleuchtungslichtbündels in Ausbreitungsrichtung andererseits zueinander synchronisiert - gleichzeitig oder nacheinander in aufeinander abgestimmtem Bewegungsrhythmus - bewegt werden.

Wie bereits erwähnt, kann vorteilhaft vorgesehen sein, dass der Spaltdetektor der jeweils aktiv geschaltete Teil eines in der Detektionsebene angeordneten Flächendetektors, beispielsweise eines CMOS-Detektors oder sCMOS-Detektors, ist, wobei es insbesondere möglich ist, lediglich eine Teil des Flächendetektors, nämlich den Teil, der gerade dem Spaltdetektor entspricht, auszulesen (aktiv geschalteter Teil), während die übrigen Teile des Flächendetektors, nämlich die Teile, die außerhalb des Spaltdetektors liegen, nicht ausgelesen werden (nicht aktiv geschalteter Teil).

Alternativ kann der Spaltdetektor einen in der Detektionsebene angeordneten Flächendetektor aufweisen, dem eine, insbesondere mechanische, Spaltblende vorgeschaltet ist, deren Spaltbreitenrichtung parallel zur Längserstreckungsrichtung der Abbildung des Beleuchtungsstreifens ausgerichtet ist. Insbesondere um den Spaltdetektor bewegen zu können kann diese Spaltblende beispielsweise durch einen mechanischen Verschlussvorhang, wie er in Spiegelreflexkameras Verwendung findet, ausgeführt sein. Der Flächendetektor kann bei dieser Ausführung bezüglich seiner gesamten Sensorfläche, insbesondere auch während die Spaltblende und/oder das Beleuchtungslichtbündel und/oder der Fokus des Beleuchtungslichtbündels bewegt werden, aktiv sein.

Auch bei einer Ausführung des Spaltdetektors mit einer Spaltblende, kann vorgesehen ein, dass der Spaltdetektor, insbesondere durch Verschieben der Spaltblende, in der Detektionsebene relativ zu dem einfallenden Detektionslicht, insbesondere in Spaltbreitenrichtung, bewegt wird.

Die Spaltblende kann besonders vorteilhaft auch als nicht-mechanisches Bauteil ausgeführt werden. Zum Beispiel als abschnittsweise schaltbarer Spiegel/Absorber z.B. auf Basis von Flüssigkristallen. Besonders vorteilhaft wäre es mit spektralen Filtern verbunden.

Wie bereits erwähnt kann vorteilhaft vorgesehen sein, dass das Beleuchtungslichtbündel während des Detektierens in der Beleuchtungsebene relativ zur Probe bewegt wird. Hierzu kann beispielsweise eine hinsichtlich des Ablenkwinkels einstellbare Strahlablenkeinrichtung verwendet werden. Eine solche Strahlablenkeinrichtung kann beispielsweise wenigstens einen Galvanometerspiegel aufweisen. Insbesondere kann beispielsweise auch die ohnehin vorhandene Strahlablenkvorrichtung eines Rastermikroskops, insbesondere eines konfokalen Rastermikroskops, verwendet werden, dies insbesondere wenn die erfindungsgemäße Vorrichtung durch Umrüstung eines Rastermikroskops hergestellt ist oder das erfindungsgemäße Verfahren mithilfe eines Rastermikroskops ausgeführt wird.

Insbesondere um das gesamte Bildfeld sukzessive zu untersuchen, kann das Beleuchtungslichtbündel während des Detektierens in der Beleuchtungsebene senkrecht zur Ausbreitungsrichtung des Beleuchtungslichtbündels bewegt werden. Insbesondere kann das Beleuchtungslichtbündel während des Detektierens in der Beleuchtungsebene senkrecht zur Ausbreitungsrichtung des Beleuchtungslichtbündels fortlaufend hin und her bewegt werden. Dies kann insbesondere in der Weise erfolgen, dass das Beleuchtungslichtbündel fortlaufend senkrecht zur Ausbreitungsrichtung des Beleuchtungslichtbündels über die gesamte Breite des Bildfeldes hin und her bewegt wird, wobei nach jedem Durchlaufen der Bildfeldbreite der Spaltdetektor, insbesondere Verbunden mit einem entsprechenden, gleichzeitigen Verschieben des Fokus des Beleuchtungslichtbündels, in Ausbreitungsrichtung oder entgegengesetzt zur Ausbreitungsrichtung verschoben wird. Auf diese Weise kann das gesamte Bildfeld sukzessive abgebildet werden.

Die erfindungsgemäße Vorrichtung kann vorteilhaft eine, insbesondere elektronische und/oder computerbasierte, Steuerungsvorrichtung aufweisen, die den Spaltdetektor in der Detektionsebene und das Beleuchtungslichtbündel in der Beleuchtungsebene gleichzeitig oder abwechselnd, insbesondere synchron zueinander, bewegt.

Insbesondere kann vorteilhaft vorgesehen sein, dass nacheinander auf diese Weise in unterschiedlichen, insbesondere zueinander parallelen Probenebenen, Bilddaten gewonnen werden, um einen 3D-Stapel an Bilddaten zu gewinnen.

Es ist auch möglich, dass der Spaltdetektor in der Detektionsebene und das Beleuchtungslichtbündel in der Beleuchtungsebene gleichzeitig oder abwechselnd bewegt werden, und/oder dass der Spaltdetektor in der Detektionsebene und das Beleuchtungslichtbündel in der Beleuchtungsebene synchron bewegt werden.

Wie oben bereits angedeutet, kann das Verfahren vorteilhaft in der Weise ausgeführt werden, dass der gemeinsame Kreuzungsbereich der Abbildung des Beleuchtungsstreifens auf die Detektionsebene und des Spaltdetektors einen Detektionsbereich definiert, der während des Detektierens, beispielsweise mittels einer elektronischen und/oder computerbasierten Steuerungsvorrichtung, bewegt wird. Insbesondere kann vorteilhaft vorgesehen sein, dass der Kreuzungsbereich während des Detektierens entlang eines vorgegeben oder vorgebbaren Bewegungsmusters bewegt wird. Auf diese Weise lässt sich beispielsweise das gesamte Bildfeld sukzessive abtasten. Es ist auf diese Weise auch möglich, ausschließlich einen Unterbereich oder mehrere Unterbereiche der Probe, die eine vorgegebene oder vorgebbare Form aufweisen können, zu untersuchen.

Wie bereits erwähnt kann vorteilhaft auch vorgesehen sein, dass die Probe in unterschiedlichen Probenebenen untersucht wird. Hierzu wird die Probe relativ zur Beleuchtungsebene - und/oder umgekehrt die Beleuchtungsebene, beispielsweise mit einer hinsichtlich der Ablenkrichtung einstellbaren Strahlablenkeinrichtung, relativ zur Probe verschoben. Insoweit kann vorteilhaft auch vorgesehen sein, dass nacheinander oder in zyklischem Wechsel interessierende Unterbereiche, die in unterschiedlichen Probenebenen angeordnetsind, untersucht werden.

Insbesondere kann dies beispielsweise in der Weise erfolgen, dass zunächst eine (zweidimensionale oder dreidimensionale) Übersichtsabbildung der Probe erzeugt wird (zum Beispiel mit geringer Auflösung und/oder Helligkeit) und dass anschließend wenigstens ein interessierender Probenbereich (Unterbereich) festgelegt wird. Danach werden der Beleuchtungsstreifen und der Spaltdetektor so positioniert, dass der interessierende Probenbereich mit dem Fokus des Beleuchtungslichtbündels beleuchtet wird und das von dem interessierenden Probenbereich ausgehende Detektionslicht innerhalb des Detektionsbereichs auf die Detektionsebene trifft.

Es ist insbesondere auch möglich, dass der interessierende Probenbereich größer ist, als der Fokus des Beleuchtungslichtbündels. Der Probenbereich wird dann dadurch abgebildet, dass - wie oben in Bezug auf eine ganze Bildfeldebene beschrieben - das Beleuchtungslichtbündel und der Spaltdetektor synchron bewegt werden. Insbesondere kann vorteilhaft auch vorgesehen sein, dass die Größe des Fokus des Beleuchtungslichtbündels kleiner ist, als der interessierende Probenbereich, um den interessierenden Probenbereich mit großer Auflösung auf diese Weise abtasten zu können.

Es kann insbesondere eine dreidimensionale Übersichtsabbildung der Probe erzeugt werden, indem nacheinander unterschiedliche Probenebenen untersucht werden. Anschließend wird wenigstens ein interessierender Probenbereich, als ein Unterbereich derjeweiligen Probenebene, in einer der Probenebenen festgelegt, wobei das Beleuchtungslichtbündel, insbesondere der Fokus des Beleuchtungslichtbündels, und der Spaltdetektor so positioniert werden, dass das von dem interessierenden Probenbereich ausgehende Detektionslicht innerhalb des Detektionsbereichs auf die Detektionsebene trifft.

Bei einer besonders vorteilhaften Ausführung ist wenigstens eine einstellbare Strahlablenkeinrichtung im Detektionsstrahlengang angeordnet, die es ermöglicht, die Abbildung des interessierenden Bereichs in die Detektionsebene in das Zentrum und/oder in den Auslesebereichs des dort angeordneten Flächendetektors zu verschieben. Dies hat den ganz besonderen Vorteil, dass die Auslesegeschwindigkeit auf diese Weise erheblich erhöht wird. Hierbei geht es nicht lediglich darum (auch wenn dies möglich ist), mit Zoom- und Schiebe-Optik lediglich den zentralen Bereich des Bildfeldes herauszuvergrößern. Vielmehr geht es insbesondere darum, verschiedene interessierende Bereiche der Probe mit hoher Auflösung abzubilden, was mit den aus dem Stand der Technik bekannten Vorrichtungen auf Grund der eingangs erwähnten Dicke des Lichtblattes dieser Vorrichtungen nicht möglich ist. Vielmehr ermöglicht es die vorliegende Erfindung einen interessierenden Bereich oder sukzessive mehrere interessierende Bereich mit hoher Auflösung zu untersuchen, ohne die Probe hierfür verschieben zu müssen.

Ein Verschieben der Abbildung des interessierenden Bereich in das Zentrum und/oder in den Auslesebereich des in der Detektionsebene angeordneten Flächendetektors ist insbesondere dann von Vorteil, wenn die Auslesegeschwindigkeit (beispielsweise die Kameraauslesegeschwindigkeit und/oder die Framerate, für gleich große interessierende Bereiche von der Position der Abbildung der interessierenden Bereiche auf dem Flächendetektor abhängt, wie beispielsweise bei derzeit üblichen sCMOS-Detektoren.

Vorteilhaft kann insbesondere ein Flächendetektor eingesetzt werden, bei denen die Auslesegeschwindigkeit ausschließlich von der Zahl der auszulesenden Pixel, unabhängig von deren Position innerhalb des Detektors, abhängt. Mittels eines solchen Flächendetektors kann eine Vielzahl von interessierenden Bereichen gleichzeitig ausgelesen werden, wobei die Auslesegeschwindigkeit ausschließlich von der Zahl der zum Erfassen aller interessierenden Bereiche auszulesenden Pixel abhängt. Bei Verwendung eines solchen Flächendetektors kann auf das Verschieben der Abbildung des interessierenden Bereiches in das Zentrum des in der Detektionsebene angeordneten Flächendetektors verzichtet werden.

Wie bereits erwähnt kann die Übersichtsabbildung mit verminderter Abbildungsqualität, beispielsweise mit einem dickeren Lichtblatt und/oder einer erhöhten Schärfentiefe der Detektionsoptik erzeugt werden (z.B. durch Abblenden) Ebenso kann das Detektionsobjektiv für die Übersichts-Abbildung gegen eines mit geringerer Vergrößerung getauscht werden. Insbesondere kann vorteilhaft vorgesehen sein, dass die Übersichtabbildung in einem Modus gewonnen wird, der eine ausreichende Abbildungsqualität zum Auswählen eines interessierenden (Unter-)Bereichs oder mehrerer interessierender (Unter-)Bereiche ermöglicht, bei dem jedoch die Probe, beispielsweise durch Abblenden von Beleuchtungs- und Detektionsobjektiv, möglich wenig geschädigt wird.

Hierzu ein Beispiel: Der Flächendetektor kann beispielsweise eine Sensorfläche von 2048 × 2048 Pixeln aufweisen, die mit 100Hz ausgelesen werden können. Der Nutzer oder eine automatische Bild-Erkennungs-Software wählen beispielsweise einen Bereich oder mehrere interessante Bereiche mit einer Größe von 205 × 205 Pixeln aus. Der kleine Bereich kann mit deutlich höherer Geschwindigkeit, nämlich ca. 10 mal so schnell, ausgelesen werden als der gesamte Flächendetektor, weil beispielsweise für übliche sCMOS-Sensoren die Auslesegeschwindigkeit von der Zahl der Zeilen abhängt. Auch wenn der interessierende Bereich 205 × 2048 Pixel aufweisen würde, wäre die Auslesegeschwindigkeit so hoch, da die Geschwindigkeit nur mit der Zahl der Zeilen skaliert. Ein Flächendetektor dessen Auslesegeschwindigkeit nur von der Zahl der auszulesenden Pixel abhängt, wäre sogar noch schneller, in diesem Fall 100 mal schneller.

Bei einer besonders vorteilhaften Ausführung wird die Abbildung eines interessierenden Bereichs, insbesondere mittels einer im Detektionsstrahlengang angeordneten, einstellbaren Strahlablenkeinrichtung, auf dem Flächendetektor so positioniert, dass die Abbildung nahe dem Bereich des Ausleseortes des Flächendetektors positioniert wird. Wichtig ist bei einigen Flächendetektoren für das schnelle detektieren eines interessierenden Bereichs der Abstand der am Weitesten vom Ausleseort entfernten Zeile, die zum Erfassen des Bereichs ausgelesen werden muss.

Wenn der Nutzer fünf Regionen in der Beleuchtungsebene auswählen würde, könnten diese immer noch 20 mal schneller aufgenommen werden. Zu dieser Verbesserung der Geschwindigkeit kommt gegenüber der Auswahl von interessierenden Bereichen (ROI, region of interest) in einem Light-Sheet Mikroskop gemäß dem Stand der Technik noch der Vorteil, dass die kleinen Bereiche mit sehr deutlich höherer Bildqualität untersucht werden können, da sie von einem kleineren (axial kürzerer Fokus), aber dünneren Lichtblatt beleuchtet werden, dessen laterale und axiale Abmessungen in etwa denen der ROI entsprechen. Ist die ROI größer als der Fokus des Beleuchtungslichtbündels, insbesondere Lichtblattes, muss der Strahl zum Untersuchen der ROI, wie oben beschrieben, synchron mit dem Spaltdetektor verschoben werden.

Falls die kleinste ROI kleiner ist als die Dimensionen des Fokus des Beleuchtungslichtbündels wird natürlich das Potential des erfindungsgemäßen Verfahrens nicht vollständig genutzt. Ist der Fokus des Beleuchtungslichtbündels länger, so ist er nicht so dünn wie es eigentlich sein könnte und daher die Bildqualität nicht optimal. Wie bereits erwähnt, kann in diesem Fall jedoch entlang der Beleuchtungsachse geschoben werden und dazu synchron der Auslesebereich bewegt werden.

Wenn der Fokus des Beleuchtungslichtbündels breiter ist, kommt es zur unnötigen zusätzlichen Beleuchtung benachbarter Regionen in der Probe, ist es hingegen zu schmal kann die dadurch bedingte Beleuchtungsstärke/ Intensität probenschädigend wirken. Vorzugsweise werden die Abmessungen des Fokus des Beleuchtungslichtbündels und/oder des Spaltdetektors den jeweiligen Anforderungen angepasst.

Bei einer besonderen Ausführung werden mehrere interessierende Bereiche festgelegt, die nacheinander und/oder fortlaufend in schneller Folge untersucht werden. Die mehreren interessierenden Bereiche können sich in einer einzigen Probenebene befinden oder auf mehrere Probenebenen verteilt sein.

Wie bereits erwähnt, kann das Beleuchtungslichtbündel innerhalb des Beleuchtungsstreifens einen Fokus aufweisen. Insbesondere kann vorteilhaft vorgesehen sein, dass das Beleuchtungslichtbündel mittels eines Beleuchtungsobjektivs derart fokussiert wird, dass das Beleuchtungslichtbündel innerhalb des Beleuchtungsstreifens einen Fokus aufweist.

Wie ebenfalls bereits erwähnt, ist es von besonderem Vorteil, wenn der Fokus, beispielsweise mittels einer elektronischen und/oder computerbasierten Steuerungsvorrichtung, synchron und entsprechend der Bewegung des Spaltdetektors bewegt wird. Insbesondere kann vorteilhaft vorgesehen sein, dass der Kreuzungsbereich der Abbildung des Beleuchtungsstreifens auf die Detektionsebene und des Spaltdetektors einen Detektionsbereich definiert, der während des Detektierens entlang eines vorgegeben oder vorgebbaren Bewegungsmusters bewegt wird, wobei der Fokus des Beleuchtungslichtbündels synchron derart bewegt wird, dass das von dem mit dem Fokus beleuchteten Probenbereich ausgehende Detektionslicht stets innerhalb des Detektionsbereichs auf die Detektionsebene trifft.

Es kann beispielsweise vorgesehen sein, dass das Beleuchtungsobjektiv relativ zur Probe mittels einer Schiebevorrichtung beweglich angeordnet ist, um den Fokus verschieben zu können. Insbesondere wenn das Beleuchtungsobjektiv, als Luftimmersions-Objektiv ausgeführt ist, ist die physische Verschiebung des Beleuchtungsobjektivs selbst eine einfache und sehr brauchbare Lösung, um den Fokus in der beschriebenen Weise zu verschieben. Eine Verschiebung des Beleuchtungsobjektivs kann beispielsweise durch einen gewöhnlichen Motor, beispielsweise in einem Objektivrevolver eines Mikroskop-Statives, oder beispielsweise durch einen Piezo-Versteller erfolgen.

Insbesondere wenn das Beleuchtungsobjektiv als Wasserimmersionsobjektiv oder als Ölimmersionsobjektiv ausgebildet ist, ist ein Schieben des Fokus mittels einer im Strahlengang des Beleuchtungslichtbündels angeordneten Fokuseinstellvorrichtung vorteilhaft, die es erlaubt, die Relativposition von Beleuchtungsobjektiv und Probe während des Schiebens unverändert zu lassen.

Bei einer besonders vorteilhaften Ausführung wird der Fokus des Beleuchtungslichtbündels durch Verändern der Länge des optischen Lichtweges des Beleuchtungslichtbündels bewegt. Hierzu kann insbesondere eine Fokuseinstellvorrichtung vorhanden sein, die wenigstens einen Arm aufweist, dessen optische Länge einstellbar ist. Alternativ oder zusätzlich kann zum Schieben eines Fokus des Beleuchtungslichtbündels beispielsweise eine Zoomoptik oder wenigstens eine Linse mit veränderbarer Brennweite vorhanden sein. Eine solche Fokuseinstellvorrichtung hat den Vorteil, dass das Beleuchtungsobjektiv relativ zur Probe ortsfest bleiben kann, so dass eine Beeinflussung der Probe, insbesondere wenn ein Immersionsmittel zu Einsatz kommt, durch eine Relativbewegung des Beleuchtungsobjektivs vermieden ist.

Die Fokuseinstellvorrichtung kann insbesondere einen Polarisationsstrahlteiler aufweisen, der das mittelbar oder unmittelbar von einer Beleuchtungsvorrichtung kommende, linearpolarisierte Beleuchtungslichtbündel in einen Einstellarm passieren lässt, der von einem Umlenkspiegel abgeschlossen ist und in dem eine Tubuslinse, eine λ/4-Platte sowie ein Objektiv angeordnet ist. Der senkrecht zur Ausbreitungsrichtung des Beleuchtungslichtbündels angeordnete Umlenkspiegel ist entlang der optischen Achse verschiebbar gehaltert. Der Umlenkspiegel reflektiert das Beleuchtungslichtbündel zurück, so dass dieses nach nochmaligem Durchlaufen des Objektivs, der λ/4-Platte sowie der Tubuslinse zurück zu dem Polarisationsstrahlteiler gelangt. Das an dem Polarisationsstrahlteiler wieder ankommende Beleuchtungslichtbündel weist aufgrund des zweimaligen Durchlaufens der entsprechend orientierten λ/4-Platte eine um 90 Grad gedrehte Linearpolarisationsrichtung auf und wird daher von dem Polarisationsstrahlteiler zu einer weiteren Tubuslinse, der das eigentliche Beleuchtungsobjektiv nachgeschaltet ist, reflektiert. Durch Verschieben des Umlenkspiegels kann die Lage des Fokus in der Beleuchtungsebene entlang der Ausbreitungsrichtung des Beleuchtungslichtbündels verschoben werden.

Wie bereits erwähnt ist das Beleuchtungslichtbündel bei einer ganz besonders vorteilhaften Ausführung wenigstens im Bereich des Beleuchtungsstreifens als Lichtblatt ausgebildet. Eine solche Ausführung hat den ganz besonderen Vorteil, dass ein dünner flächiger Bereich der Beleuchtungsebene beleuchtet und insgesamt bei hohem Kontrast abgebildet werden, ohne dass die darüber und darunter liegenden Probenbereiche ebenfalls beleuchtet werden.

Das Lichtblatt kann, insbesondere mit einer Zylinderoptik, beispielsweise aus einem im Querschnitt ursprünglich runden Beleuchtungslichtbündel erzeugt werden. Im Sinne der vorliegenden Erfindung wird unter einer Zylinderoptik jegliche astigmatische Optik und/oder jegliche Optik verstanden, die in einer Richtung senkrecht zur Ausbreitungsrichtung des Beleuchtungslichtbündels stärker fokussiert, als in einer anderen Richtung senkrecht zur Ausbreitungsrichtung des Beleuchtungslichtbündels.

Es sind aber auch andere Beleuchtungslichtbündel möglich, insbesondere in Verbindung mit einer Vorrichtung zum Bewegen des Strahls in der Beleuchtungsebene senkrecht zur Ausbreitungsrichtung des Beleuchtungslichtbündels. Dazu gehören Bessel-Strahlen, Mathieu-Strahlen, Airy-Strahlen, sowie die kohärente Superposition der genannten Strahlen.

Ebenfalls möglich ist die Anregung von Fluoreszenz in der Probe über nichtlineare Effekte, insbesondere Zweiphotonenabsorption.

Die erfindungsgemäße Vorrichtung kann beispielsweise ein Beleuchtungsobjektiv und ein Detektionsobjektiv aufweisen, wobei die optische Achse des Beleuchtungsobjektivs senkrecht zur optischen Achse des Detektionsobjektivs ausgerichtet ist.

Bei einer besonders vorteilhaften Ausführung sind die optische Achse des Beleuchtungsobjektivs und die optische Achse des Detektionsobjektivs zueinander parallel oder koaxial ausgerichtet. Alternativ oder zusätzlich kann auch vorgesehen sein, dass das Detektionsobjektiv und das Beleuchtungsobjektiv einander entgegengesetzt und einander gegenüberliegend ausgerichtet sind und/oder dass räumlich zischen dem Detektionsobjektiv und dem Beleuchtungsobjektiv ein Probenhalter angeordnet ist, der eine Untersuchungsposition für eine zu untersuchende Probe definiert. Eine solche Ausführung hat den besonderen Vorteil, dass die optische Vorrichtung besonders kompakt und robust ausgeführt werden kann, und dass die Untersuchungsposition für die Probe besonders einfach zugänglich ist, so dass ein schnelles und präzises, sukzessives Verbringen der Proben in die Untersuchungsposition ermöglicht ist.

Die erfindungsgemäße Vorrichtung kann vorteilhaft ein Umlenkmittel aufweisen, das das Beleuchtungslichtbündel, nachdem es das Beleuchtungsobjektiv durchlaufen hat, derart umlenkt, dass das Beleuchtungslichtbündel in der Beleuchtungsebene verläuft. Insbesondere kann das Umlenkmittel derart angeordnet sein, dass das umgelenkte Beleuchtungslichtbündel einen von Null Grad verschiedenen Winkel zur optischen Achse des Beleuchtungsobjektivs und/oder des Detektionsobjektivs aufweist. Insbesondere kann die Beleuchtungsebene senkrecht zur optischen Achse des Beleuchtungsobjektivs ausgerichtet sein.

Insbesondere kann vorteilhaft vorgesehen sein, dass das, insbesondere zu einem Lichtblatt geformte, Beleuchtungslichtbündel zunächst in vertikaler Richtung durch das Beleuchtungsobjektiv verläuft und anschließend in horizontale Richtung mit der Umlenkeinrichtung umgelenkt wird, um die Probe in der Probenebene entlang des Beleuchtungsstreifens zu beleuchten. Vorzugsweise verläuft das von dem Beleuchtungsstreifen ausgehende Detektionslicht, insbesondere Fluoreszenzlicht, in vertikaler Richtung durch ein Detektionsobjektiv. Ein solcher Aufbau ermöglicht die Verwendung von aufrechten oder inversen Standard-Mikroskopstativen zur Herstellung der erfindungsgemäßen optischen Vorrichtung.

Bei einer ganz besonders vorteilhaften Ausführung ist vorgesehen, dass das Beleuchtungsobjektiv und die Umlenkeinrichtung, die beispielsweise einen oder mehrere Umlenkspiegel aufweisen kann, relativ zueinander beweglich angeordnet sind, um das Beleuchtungslichtbündel relativ zur Probe bewegen zu können. Alternativ oder zusätzlich kann auch vorgesehen sein, dass die Umlenkeinrichtung, insbesondere beweglich, an dem Detektionsobjektiv befestigt ist.

Eine Vorrichtung, die geeignet ist, das erfindungsgemäße Verfahren auszuführen, kann vorteilhaft auf der Basis eines Rastermikroskops, insbesondere eines konfokalen Rastermikroskops, aufgebaut sein. Hierbei bietet sich insbesondere die Verwendung eines inversen Mikroskopstatives an. Von besonderem Vorteil ist insoweit die Verwendung eines (möglicherweise in einem Labor ohnehin vorhandenen) Rastermikroskops zur Ausführung des erfindungsgemäßen Verfahrens.

Bei einer ganz besonders vorteilhaften Ausführung wird das oben beschriebene Verfahren zeitgleich mehrmals bei ein und derselben Probe ausgeführt. Dies hat beispielsweise den ganz besonderen Vorteil, dass gleichzeitig unterschiedliche Probenbereiche untersucht werden können. Diese Probenbereiche können sich in derselben Probenebene oder auch in unterschiedlichen Probenebenen befinden. Insoweit kann das, was oben, insbesondere in Bezug auf die Beleuchtung eines Beleuchtungsstreifens und die spezielle Anordnung und Ausbildung des Spaltdetektors, ausgeführt ist, zeitgleich zur Untersuchung derselben Probe auch mehrmals ausgeführt werden. Insbesondere kann hierfür vorgesehen sein, dass das Beleuchtungsobjektiv gleichzeitig mehrere Beleuchtungslichtbündel auf die Probe fokussiert. Diese können beispielsweise verschiedene Wellenlängen aufweisen, um verschiedene Fluorophore anzuregen, die Detektionslicht in unterschiedlichen Spektralbereichen emittieren. Die Abbildung kann auf verschiedene Sensorhälften stattfinden, denen jeweils passende spektrale Filter vorgeschaltet sind. So kann ein Übersprechen ("crosstalk") wirkungsvoll, also die Erzeugung von Hintergrund im jeweils anderen Bild, unterdrückt werden.

Bei einer besonderen Ausführung wird die Probe in der Beleuchtungsebene oder in einer anderen, insbesondere zur Beleuchtungsebene parallelen, Beleuchtungsebene entlang wenigstens eines weiteren Beleuchtungsstreifens mit wenigstens einem weiteren Beleuchtungslichtbündel, das sich entlang des weiteren Beleuchtungsstreifens ausbreitet, beleuchtet. Außerdem kann vorgesehen sein, dass das von dem weiteren Beleuchtungsstreifen ausgehende weitere Detektionslicht in die Detektionsebene abgebildet und von wenigstens einem weiteren Spaltdetektor detektiert wird, wobei die Spaltbreitenrichtung des weiteren Spaltdetektors parallel zur Längserstreckungsrichtung der Abbildung des weiteren Beleuchtungsstreifens in die Detektionsebene ausgerichtet ist. Die mindestens zwei Beleuchtungslichtbündel können wie oben beschrieben verschiedene Wellenlängen aufweisen. In ganz besonders vorteilhafter Weise können der Spaltdetektor und der weitere Spaltdetektor Teile desselben Flächendetektors sein. Alternativ oder zusätzlich ist es auch möglich, dass der Spaltdetektor ein aktiv geschalteter Teil eines in der Detektionsebene angeordneten Flächendetektors ist und dass der weitere Spaltdetektor ein anderer aktiv geschalteter Teil desselben Flächendetektors ist.

Insbesondere bei einer solchen Ausführung können mehrere interessierende Bereiche der Probe festgelegt werden, die gleichzeitig beleuchtet werden, wobei das von dem beleuchteten Beleuchtungsstreifen ausgehende Detektionslicht gleichzeitig mittels der Spaltdetektoren detektiert wird.

In der Zeichnung ist der Erfindungsgegenstand beispielhaft und schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: schematisch eine Detailansicht eines ersten Ausführungsbeispiels einer erfindungsgemäßen Vorrichtung.
- Fig. 2: eine Draufsicht auf den Flächendetektor des ersten Ausführungsbeispiels,
- Fig. 3: schematisch eine Detailansicht eines zweiten Ausführungsbeispiels einer erfindungsgemäßen Vorrichtung,
- Fig. 4: eine Draufsicht auf den Flächendetektor des zweiten Ausführungsbeispiels,
- Fig. 5: schematisch eine Detailansicht eines dritten Ausführungsbeispiels einer erfindungsgemäßen Vorrichtung,
- Fig. 6: schematisch ein Ausführungsbeispiel einer Fokuseinstellvorrichtung zum Schieben eines Fokus des Beleuchtungslichtbündels,
- Fig. 7: schematisch ein anderes Ausführungsbeispiel einer Fokuseinstellvorrichtung zum Schieben eines Fokus des Beleuchtungslichtbündels,
- Fig. 8: schematisch eine Detailansicht eines vierten Ausführungsbeispiels einer erfindungsgemäßen Vorrichtung,
- Fig. 9: eine Draufsicht auf die Beleuchtungsebene des vierten Ausführungsbeispiels,
- Fig. 10: schematisch ein fünftes Ausführungsbeispiel einer erfindungsgemäßen Vorrichtung,
- Fig. 11: schematisch eine Illustration eines weiteren Ausführungsbeispiels des erfindungsgemäßen Verfahrens, und
- Fig. 12: schematisch die zeitgleiche Untersuchung mehrerer interessierender Bereiche einer Beleuchtungsebene.

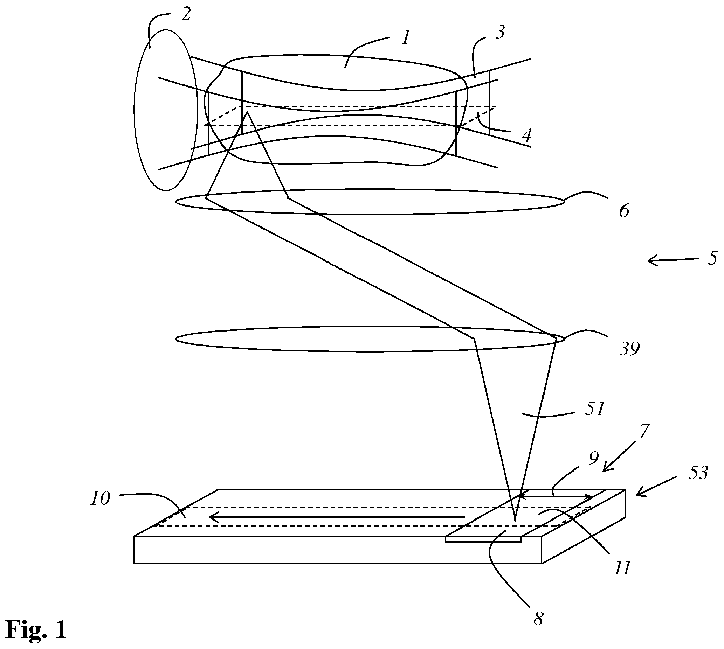

Figur 1 zeigt schematisch eine Detailansicht eines ersten Ausführungsbeispiels einer erfindungsgemäßen Vorrichtung zum Untersuchen einer Probe 1. Die Vorrichtung beinhaltet ein Beleuchtungsobjektiv 2, das ein als Lichtblatt ausgebildetes Beleuchtungslichtbündel 3 fokussiert. Konkret wird die Probe 1 in einer Beleuchtungsebene entlang eines Bereichs der Probe, nämlich entlang eines Beleuchtungsstreifens 4, mit dem Beleuchtungslichtbündel 3 beleuchtet, wobei sich das Beleuchtungslichtbündel entlang der Längserstreckungsrichtung des Beleuchtungsstreifens 4 ausbreitet.

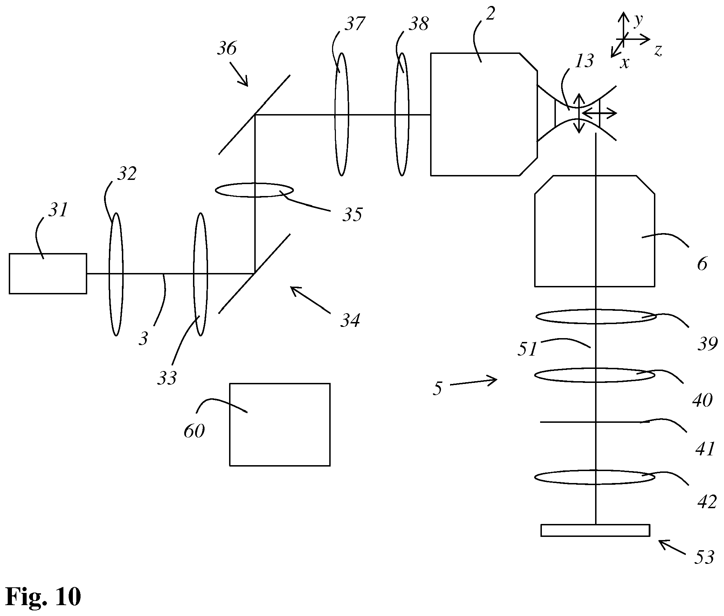

Die Vorrichtung weist außerdem eine Detektionsoptik 5 auf, die ein Detektionsobjektiv 6 beinhaltet und die darüber hinaus weitere strahlformende Elemente, insbesondere Linsen, insbesondere eine Tubuslinse 39, beinhalten kann, was der besseren Übersicht halber in der Figur 1 vereinfacht dargestellt ist. Die Detektionsoptik 5 bildet das von dem Beleuchtungslichtstreifen ausgehende Detektionslicht in eine Detektionsebene ab, in der ein Detektor 7 angeordnet ist. Der Detektor 7 ist als Spaltdetektor 8 ausgebildet, wobei die Spaltbreitenrichtung 9 (als Doppelpfeil dargestellt) des Spaltdetektors 8 parallel zur Längserstreckungsrichtung der Abbildung 10 des Beleuchtungsstreifens 4 ausgerichtet ist. Der Spaltdetektors 8 ist durch den jeweils aktiv geschalteten Teil eines Flächendetektors 53 gebildet.

Der gemeinsame Kreuzungsbereich 11 der Abbildung 10 des Beleuchtungsstreifens 4 auf die Detektionsebene einerseits und des Spaltdetektors 8 andererseits definiert einen Detektionsbereich. Das Detektionslicht 51, das außerhalb des Spaltdetektors 8 auf den Flächendetektor 53 trifft, wird nicht detektiert, weil der Flächendetektor 53 dort nicht ausgelesen wird. Außerhalb der Abbildung 10 des Beleuchtungsstreifens 4 trifft kein Detektionslicht 51 auf den Flächendetektor 53.

Da daher lediglich der Kreuzungsbereich 11 für die Detektion relevant ist, kann das Beleuchtungslichtbündel 3 einen axial sehr kurzen und damit sehr dünnen Fokus aufweisen, was sich ganz besonders vorteilhaft auf die Qualität der Abbildung der Probe auswirkt, weil die Probenebenen oberhalb und unterhalb der relevanten, aktuell zu untersuchenden Probenebene nicht beleuchtet werden und daher von diesen Probenebenen kein Fluoreszenzlicht ausgeht.

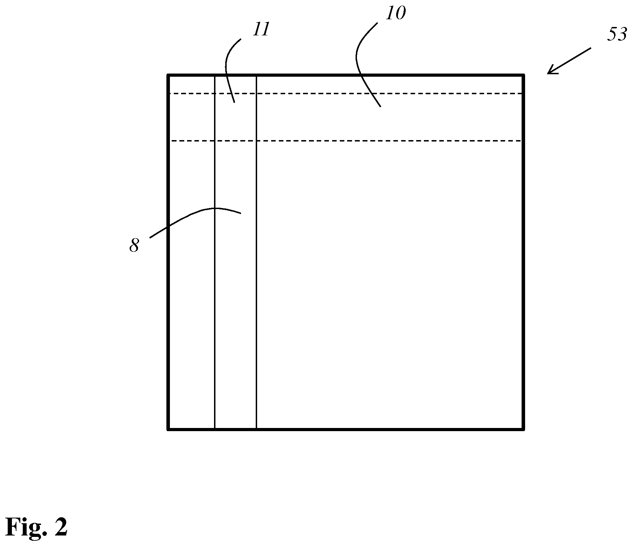

Figur 2 zeigt eine Draufsicht auf den Flächendetektor 53 des ersten Ausführungsbeispiels, der beispielsweise als CMOS-Detektor oder als sCMOS-Detektor ausgebildet sein kann. Es ist deutlich zu erkennen, dass die Abbildung 10 des Beleuchtungsstreifens 4 senkrecht zur Längserstreckungsrichtung des Spaltdetektors 8 ausgerichtet ist. Der Flächendetektor 53 kann beispielweise eine Sensorfläche von 2048 × 2048 Pixeln aufweisen, wobei lediglich die Pixel des Kreuzungsbereichs 11, oder alternativ ausschließlich die Pixelzeilen 8, die durch den Kreuzungsbereich 11 verlaufen, ausgelesen werden.

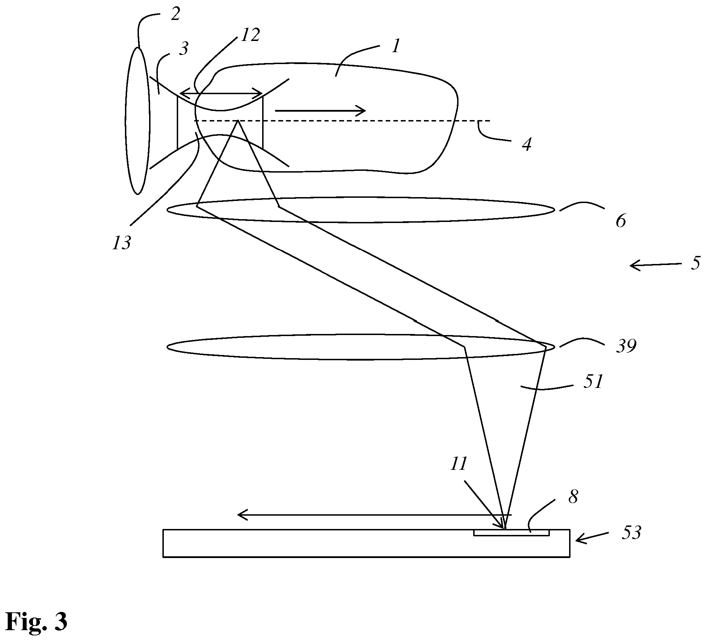

Figur 3 zeigt schematisch eine Detailansicht eines zweiten Ausführungsbeispiels einer erfindungsgemäßen Vorrichtung, die im Grundaufbau identisch ist, wie die in Figur 1 dargestellte Vorrichtung.

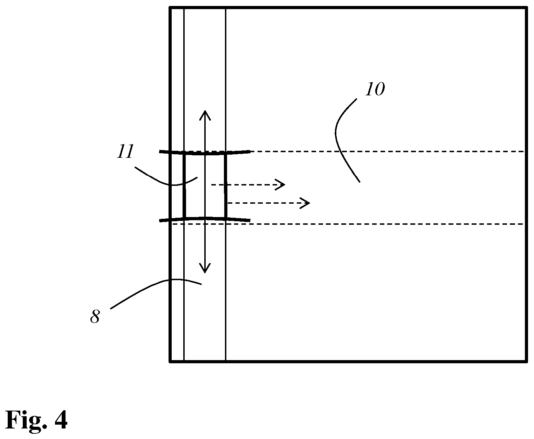

Das Beleuchtungslichtbündel 3 ist bei dieser Ausführung als Lichtblatt (Lichtblattebene senkrecht zur Zeichenebene und parallel zur optischen Achse des Beleuchtungsobjektivs 2) ausgebildet. Wie bereits erwähnt kann die Fokuslänge 12 des Fokus 13 des Beleuchtungslichtbündels 3 besonders kurz ausgebildet sein, weil lediglich der Kreuzungsbereich 11 der Abbildung des Beleuchtungsstreifens 4 und des Spaltdetektors 8 für die Detektion relevant ist, was besonders deutlich in Figur 4 zu erkennen ist. Deshalb kann der Fokus 13 des Beleuchtungslichtbündels 3 besonders dünn ausgebildet sein, was die Qualität der Abbildung der Probe 1 sehr deutlich erhöht.

Um die Probe 1 entlang des gesamten Beleuchtungsstreifens 4 abzubilden, wird der Fokus 13, beispielsweise mit Hilfe einer Fokuseinstellvorrichtung, in Ausbreitungsrichtung verschoben. Bei einer einfachen Aufführung wird hierzu das Beleuchtungsobjektiv 2 entlang der Ausbreitungsrichtung verschoben. Alternativ kann auch ein Beleuchtungsobjektiv 2 (bzw. eine Beleuchtungsoptik) mit einer Innenfokussierungsmöglichkeit verwendet werden. Analog kann zum Fokussieren des Detektionslichtes 51 das Detektionsobjektiv 6 bewegt werden. Alternativ kann auch eine Detektionsoptik 5, insbesondere ein Detektionsobjektiv 6, mit einer Innenfokussierungsmöglichkeit verwendet werden.

Synchron zur Verschiebung des Fokus 13 erfolgt ein Verschieben des Spaltdetektors 8 entlang der Längserstreckungsrichtung der Abbildung 10 des Beleuchtungsstreifens 4. Auf diese Weise ist gewährleistet, dass stets das von dem Fokusbereich 13 ausgehende Detektionslicht 51 auf den Spaltdetektor 8 trifft.

Sobald der gesamte Beleuchtungsstreifen 4 abgetastet ist, wird ein neuer, insbesondere benachbarter, Beleuchtungslichtstreifen 4 innerhalb derselben Probenebene festgelegt und anschließend dieser Beleuchtungsstreifen 4 mit dem Beleuchtungslichtbündel 3 in der beschriebenen Weise beleuchtet. Hierzu wird das Beleuchtungslichtbündel 3 relativ zur Probe in der Beleuchtungsebene, beispielsweise mit einer hinsichtlich des Ablenkwinkels einstellbaren Strahlablenkeinrichtung, parallel verschoben. Auf diese Weise kann die gesamte Beleuchtungsebene sukzessive beleuchtungsstreifenweise abgetastet werden.

Natürlich ist es auch möglich, die Beleuchtungsebene spaltenweise abzutasten, indem zunächst das Beleuchtungslichtbündel 3 über die gesamte Breite der Beleuchtungsebene verschoben wird und jeweils anschließend der Fokus 13 in Axialrichtung, sowie entsprechend der Spaltdetektor 8 verschoben werden. Der von dem Beleuchtungslichtbündel 3 auf diese Weise abgetastete Bereich muss nicht grundsätzlich rechteckig sein. Vielmehr kann der von dem Beleuchtungslichtbündel 3 beleuchtete Bereich an die Umrisse der Probe angepasst sein. Insbesondere ist es auch möglich, dass der von dem Beleuchtungslichtbündel 3 beleuchtete Bereich wenigstens einen unbeleuchteten Bereich umschließt. Insbesondere kann das Beleuchtungsmuster auch "Löcher" beinhalten.

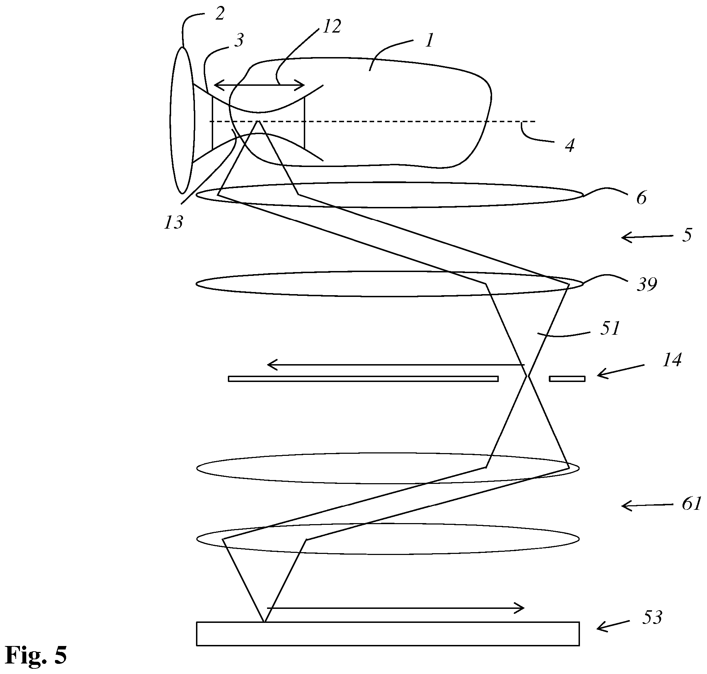

Bei den in den Figuren 1 bis 4 gezeigten Ausführungsbeispielen ist der Spaltdetektor 8, wie bereits erwähnt, Teil eines Flächendetektors 53, der beispielsweise als CMOS-Detektor oder als sCMOS-Detektor ausgebildet sein kann. Der Spaltdetektor 8 ist dadurch gebildet, dass lediglich ein Teil des Flächendetektors 53, nämlich der Teil des Flächendetektors 53, der gerade dem Spaltdetektor 8 entspricht, ausgelesen wird, während die übrigen Teile des Flächendetektors 53, nämlich die Teile, die außerhalb des Spaltdetektors 8 liegen, nicht ausgelesen werden. Es ist alternativ auch möglich, den gesamten Flächendetektor 53 fortwährend auszulesen und diesem zur Realisierung eines Spaltdetektors 8 eine verschiebbare mechanische Spaltblende 14, die beispielsweise so ausgebildet sein kann wie der Verschlussvorhang eines Fotoapparates, vorzuschalten. Eine solche Lösung ist schematisch in Figur 5 dargestellt. Auch bei dieser Ausführung werden der Fokus 13 des Beleuchtungslichtbündels 3 (in Lichtausbreitungsrichtung) und die mechanische Spaltblende 14 synchron zueinander bewegt. Das durch die mechanische Spaltblende 14 fallende Licht wird mittels einer telezentrischen Optik 61 auf den Flächendetektor 53 abgebildet.

Sowohl die in Figur 3 gezeigte Ausführung des bewegten Spaltdetektors, als auch die in Figur 5 gezeigte Ausführung eines bewegten Spaltdetektors könnte man auch als "rolling shutter" bezeichnen.

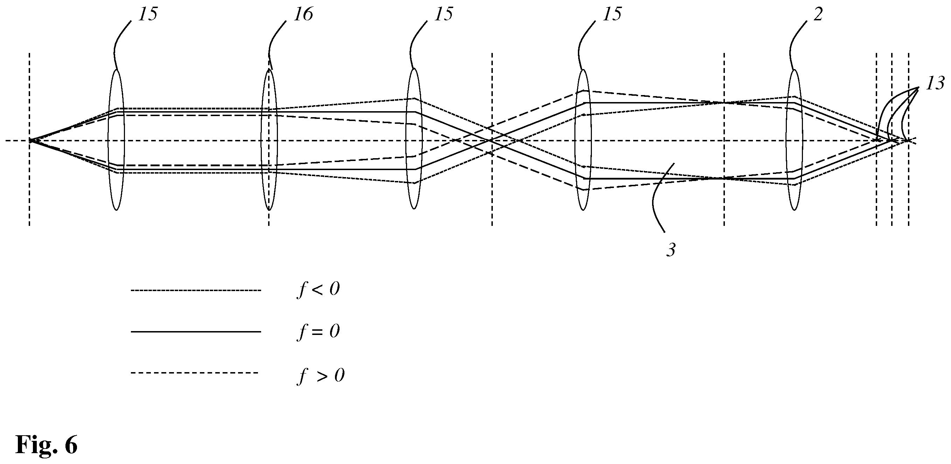

Figur 6 zeigt schematisch ein Ausführungsbeispiel einer Fokuseinstellvorrichtung zum Schieben eines Fokus 13 eines Beleuchtungslichtbündels 3. Die Fokuseinstellvorrichtung beinhaltet neben mehreren starren Linsen 15 eine hinsichtlich ihrer Brennweite f einstellbare Linse 16. Figur 6 zeigt verschiedene Strahlverläufe und verschiedene Positionen des Fokus 13 nach dem Beleuchtungsobjektiv 2 in Abhängigkeit von unterschiedlichen Brennweiten f der hinsichtlich ihrer Brennweite f einstellbaren Linse 16.

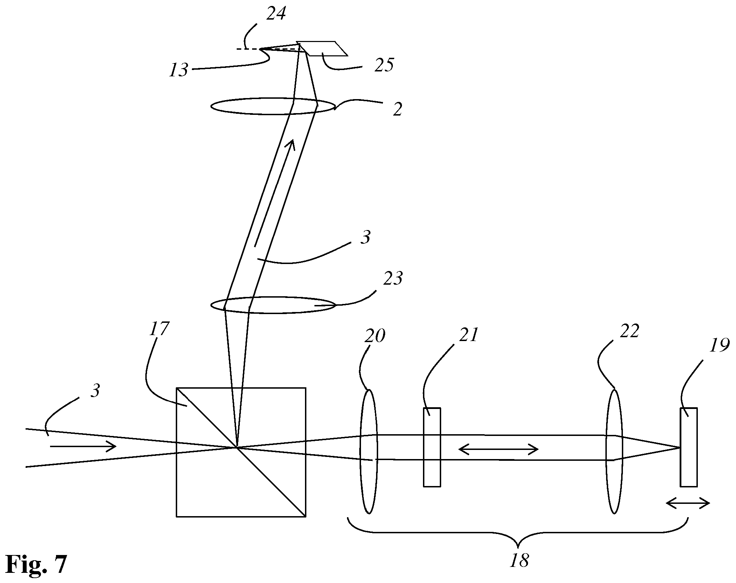

Figur 7 zeigt schematisch ein anderes Ausführungsbeispiel einer Fokuseinstellvorrichtung zum Schieben des Fokus 13 eines Beleuchtungslichtbündels 3. Die Fokuseinstellvorrichtung beinhaltet einen Polarisationsstrahlteiler 17, der ein einfallendes, linearpolarisiertes Beleuchtungslichtbündel 3 in einen Einstellarm 18 der Fokuseinstellvorrichtung passieren lässt. Der Einstellarm 18 ist von einem Umlenkspiegel 19 abgeschlossen und beinhaltet eine erste Tubuslinse 20, eine λ/4-Platte 21 sowie ein Objektiv 22. Der senkrecht zur Ausbreitungsrichtung des Beleuchtungslichtbündels 3 ausgerichtete Umlenkspiegel 19 ist entlang der optischen Achse verschiebbar gehaltert. Der Umlenkspielgel 19 reflektiert das Beleuchtungslichtbündel 3 zurück, so dass dieses nach nochmaligen Durchlaufens des Objektivs 22, der λ/4-Platte 21, sowie der ersten Tubuslinse 20 zurück zu dem Polarisationsstrahlteiler 17 gelangt. Das an dem Polarisationsstrahlteiler 17 wieder ankommende Beleuchtungslichtbündel 3 weist aufgrund des zweimaligen Durchlaufens der entsprechend orientierten λ/4-Platte 21 eine um 90 Grad gedrehte Linearpolarisationsrichtung auf und wird daher von dem Polarisationsstrahlteiler 17 zu einer weiteren Tubuslinse 23, der das eigentliche Beleuchtungsobjektiv 2 nachgeschaltet ist, reflektiert. Durch Verschieben des Umlenkspiegels 19 entlang der optischen Achse kann die Lage des Fokus 13 in der Beleuchtungsebene 24 entlang der Ausbreitungsrichtung des Beleuchtungslichtbündels 3, das nach dem Durchlaufen des Objektivs 2 von einem Umlenkmittel 25 umgelenkt wurde, verschoben werden. Das optionale Umlenkmittel 25 kann insbesondere als Spiegel ausgebildet und an dem (in dieser Figur nicht dargestellten) Detektionsobjektiv 6 befestigt sein. Bei dieser Ausführung wird ein Detektionsobjektiv vorzugsweise im rechten Winkel zur Beleuchtungsebene 24 positioniert.

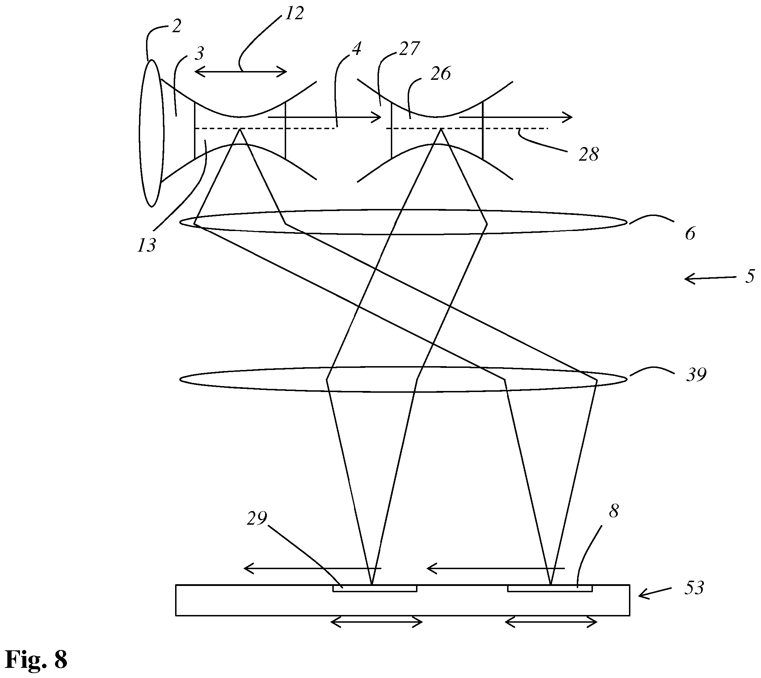

Figur 8 zeigt schematisch eine Detailansicht eines vierten Ausführungsbeispiels einer erfindungsgemäßen Vorrichtung, bei der die (in dieser Figur nicht dargestellte) Probe 1 mit dem Fokus 13 eines Beleuchtungslichtbündels 3 und zusätzlich mit dem weiteren Fokus 26 eines weiteren Beleuchtungslichtbündels 27 beleuchtet wird. Während das Beleuchtungslichtbündel 3 die Probe in einer Probenebene entlang eines Beleuchtungsstreifens 4 beleuchtet, beleuchtet das weitere Beleuchtungslichtbündel 27 die Probe in der Beleuchtungsebene entlang eines weiteren Beleuchtungsstreifens 28. Sowohl das Beleuchtungslichtbündel 3, als auch das weitere Beleuchtungslichtbündel 27 werden mittels desselben Beleuchtungsobjektivs 2 fokussiert.

Die Vorrichtung weist einen Flächendetektor 53 mit einem Spaltdetektor 8 und einem weiteren Spaltdetektor 29 auf. Der Spaltdetektor 8 wird, wie oben in Bezug auf die anderen Ausführungsbeispiele bereits beschrieben, durch sequentielles Aktiv-Schalten jeweils benachbarter Bereiche des Flächendetektor 53 synchron zu dem Fokus 13 des Beleuchtungslichtbündels 3 verschoben, während der weitere Spaltdetektor 29 in analoger Weise synchron zum Fokus 26 des weiteren Beleuchtungslichtbündels 27 verschoben wird.

Die Beleuchtungslichtbündel 3, 27 können unterschiedliche Wellenlängen aufweisen, wobei den Spaltdetektoren 8, 29 angepasste chromatische Filter vorgeschaltet sein können. Insbesondere können angepasste chromatische Filter in vorgeschaltete Spaltblenden integriert sein.

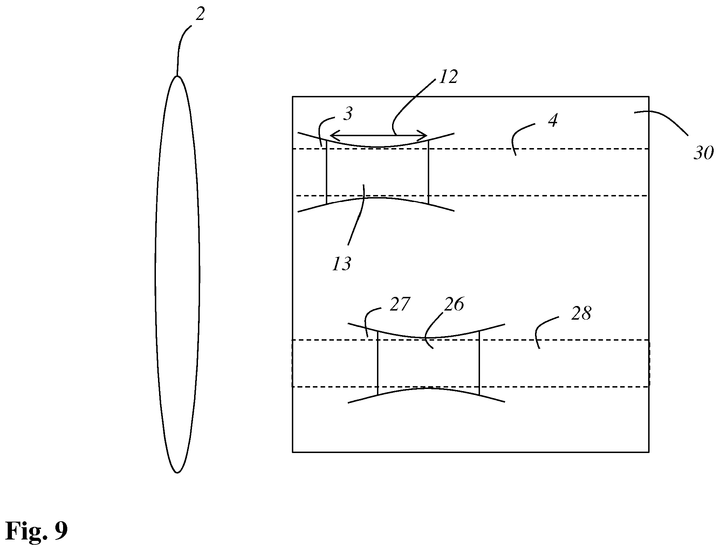

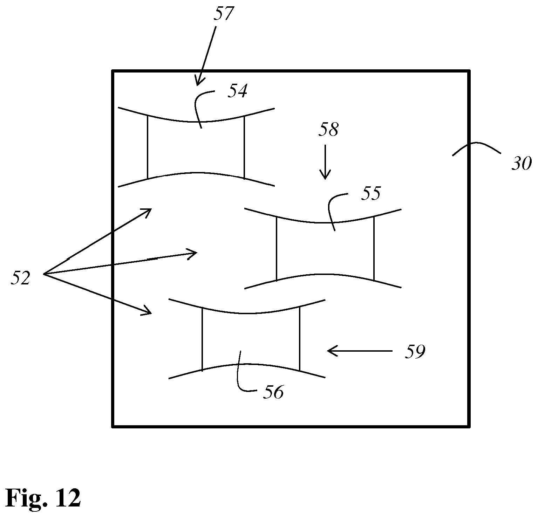

Figur 9 zeigt eine Draufsicht auf die Beleuchtungsebene 30 des vierten Ausführungsbeispiels. Es ist zu erkennen, dass mit dem Fokus 13 des Beleuchtungslichtbündels 3 einerseits und mit dem weiteren Fokus 26 des weiteren Beleuchtungslichtbündels 27 unterschiedliche Beleuchtungsstreifen 4, 28 der Probe 1 (in dieser Figur nicht dargestellt) abgetastet werden. Es ist natürlich auch möglich, auf die axiale Bewegung der Fokusse 13, 26 zu verzichten und jeweils stationär besonders interessierende Bereiche gleichzeig abzubilden. Dies kann auch mit einer noch höheren Anzahl von Beleuchtungslichtbündeln erfolgen, was schematisch in Figur 12 angedeutet ist. Dort werden unterschiedliche interessierende Bereiche 52 innerhalb der Probenebene 30 mit den Fokusse 54, 55, 56 mehrerer Beleuchtungslichtbündel 57, 58, 59 beleuchtet und das von diesen interessierenden Bereichen ausgehende Detektionslicht mit unterschiedlichen Spaltdetektoren (nicht dargestellt) detektiert. Die Beleuchtungslichtbündel 57, 58, 59 können zum Beispiel entweder gemeinsam oder separat durch Scanmittel zum lateralen Versatz und/oder durchstimmbare Linsen zum Versatz entlang der Beleuchtungsrichtung bewegt werden. Mehrere Beleuchtungslichtbündel gleichzeitig können beispielsweise durch ein diffraktives optisches Element und/oder einen räumlichen Lichtmodulator erzeugt werden. Die Abmessungen der Beleuchtungslichtbündel 57, 58, 59 werden entweder an die Größe der interessierenden Bereiche 52 angepasst oder sind kleiner als die interessierenden Bereiche 52 und werden über den Bereich gescannt. Die Beleuchtungslichtbündel 57, 58, 59 können dabei die gleichen oder verschiedene Wellenlängen aufweisen.

Figur 10 zeigt schematisch ein sechstes Ausführungsbeispiel einer erfindungsgemäßen Vorrichtung, die eine Lichtquelle 31 und eine astigmatische Optik 32 zum Erzeugen eines lichtblattförmigen Beleuchtungslichtbündels 3 aufweist. Der astigmatischen Optik 32 ist eine fokusschiebende Optik 33 nachgeordnet. Nach Passieren der fokusschiebenden Optik 33 gelangt das Beleuchtungslichtbündel 3 zu einer ersten, hinsichtlich des Ablenkwinkels einstellbaren Strahlablenkeinrichtung 34, die als X-Scanner, ausgebildet ist. Über eine Zwischenlinse 35 gelangt das Beleuchtungslichtbündel 3 dann zu einer zweiten, hinsichtlich des Ablenkwinkels einstellbaren Strahlablenkeinrichtung 36, die als Y -Scanner ausgebildet ist. Nach Passieren einer Scanoptik 37 und einer Tubusoptik 38 wird das Beleuchtungslichtbündel 3 von einem Beleuchtungsobjektiv 2 in die (in dieser Figur nicht dargestellte) Probe fokussiert.

Das von der Probe ausgehende Detektionslicht 51 gelangt über eine Detektionsoptik 5, die ein Detektionsobjektiv 6 sowie eine weitere Tubuslinse 39 und eine weitere Scanoptik 40, sowie einen Zweiachsscanner 41 und eine weitere fokusschiebende Optik 42 aufweist, zu einem Flächendetektor 53 (und zu dem durch dessen aktiv geschalteten Teil gebildeten Spaltdetektor). Mit Hilfe der fokusschiebenden Optik 33 kann der Fokus 13 des Beleuchtungslichtbündels 3 in der Lichtausbreitungsrichtung vor- oder zurückgeschoben werden. Mit Hilfe der Strahlablenkeinrichtungen 34, 36 kann das Beleuchtungslichtbündel 3, insbesondere der Fokus 13 des Beleuchtungslichtbündels 3 senkrecht zur Lichtausbreitungsrichtung bewegt werden.

Es ist eine Steuerungsvorrichtung 60 zum Steuern der Strahlablenkeinrichtungen 34, 36, der fokusschiebenden Optik 33, der weiteren fokusschiebende Optik 42, des Zweiachsscanners und der Bewegung des Spaltdetektors 8 vorhanden.

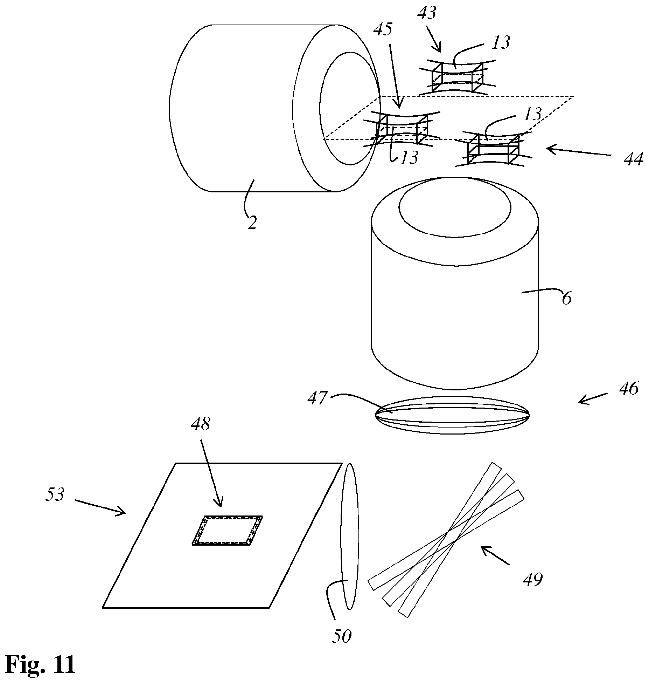

Figur 11 zeigt schematisch eine Illustration eines weiteren Ausführungsbeispiels des erfindungsgemäßen Verfahrens. Bei diesem Ausführungsbeispiel werden ein erster interessierender Bereich 43, ein zweiter interessierender Bereich 44 und ein dritter interessierender Bereich 45 der Probe ausgewählt und nacheinander mit dem Fokus 13 eines Beleuchtungslichtbündels 3 in zyklischem Wechsel beleuchtet. Die interessierenden Bereiche 43, 44, 45 befinden sich in unterschiedlichen Probenebenen. Dies erfordert die Möglichkeit, den Fokus 13 des, vorzugsweise als Lichtblatt ausgeführten, Beleuchtungslichtbündels 3 auch entlang der optischen Achse des Detektionsobjektivs 6 verschieben zu können, was beispielsweise mit Hilfe von hinsichtlich des Ablenklichtes einstellbaren Strahlablenkeinrichtungen (nicht dargestellt) realisiert werden kann. Außerdem ist im Detektionsstrahlengang einstellbares Fokussiermittel 46, das insbesondere als eine hinsichtlich ihrer Brennweite einstellbare Linse 47 ausgebildet sein kann, zum Fokussieren auf den Flächendetektor 53, der Basis für einen Spaltdetektor 8 ist, vorhanden.

Die interessierenden Bereiche werden mit dem Fokus 13 des Beleuchtungslichtbündels 3 zeitlich nacheinander abgetastet und nacheinander auf denselben Detektionsbereich 48 des Flächendetektors 53, dem ein weiteres Fokussiermittel 50 vorgeschaltet ist, abgebildet. Hierzu ist im Detektionsstrahlengang ein Kippspiegel 49 vorhanden, der dafür sorgt, dass das aus jeweils unterschiedlichen Einfallsrichtungen kommende Detektionslicht 3 stets zu demselben Detektionsbereich 48 des Flächendetektors 53 gelenkt wird. Auf diese Weise wird eine besonders hohe Detektionsrate erreicht.

## Patentansprüche

1. Verfahren zum Untersuchen einer Probe (1), bei dem eine Probe (1) in einer Beleuchtungsebene (30) entlang eines Beleuchtungsstreifens (4) mit einem Beleuchtungslichtbündel (3), das sich entlang des Beleuchtungsstreifens (4) ausbreitet, beleuchtet wird und bei dem der Beleuchtungsstreifen (4) in eine Detektionsebene abgebildet wird, indem von dem Beleuchtungsstreifen (4) ausgehendes Detektionslicht (51) in die Detektionsebene fokussiert wird, und bei dem das Detektionslicht (51) mit einem Detektor (7) detektiert wird, wobei der Detektor als Spaltdetektor (8) ausgebildet ist, **dadurch gekennzeichnet, dass** die Spaltbreitenrichtung (9) des Spaltdetektors (8) parallel zur Längserstreckungsrichtung der Abbildung (10) des Beleuchtungsstreifens (4) in die Detektionsebene ausgerichtet ist und der Spaltdetektor (8) in der Detektionsebene relativ zu dem einfallenden Detektionslicht (51) bewegt wird.

2. Verfahren nach Anspruch 1, **dadurch gekennzeichnet, dass**
a. der Spaltdetektor (8) Teil eines Flächendetektors (53) ist und/oder dass
b. der Spaltdetektor (8), der jeweils aktiv geschaltete Teil eines in der Detektionsebene angeordneten Flächendetektors (53) ist.

3. Verfahren nach Anspruch 1 oder 2, **dadurch gekennzeichnet, dass**
a. der Spaltdetektor (8) in der Detektionsebene in Spaltbreitenrichtung (9) bewegt wird und/oder dass
b. Spaltdetektor (8) durch sukzessives Aktiv-Schalten und Inaktiv-Schalten jeweils benachbarter Teile des Flächendetektors (53) in der Detektionsebene bewegt wird, und/oder dass
c. Spaltdetektor (8) durch sukzessives Aktiv-Schalten und Inaktiv-Schalten jeweils benachbarter Teile des Flächendetektors (53) in der Detektionsebene in Spaltbreitenrichtung (9) bewegt wird.

4. Verfahren nach Anspruch 1, **dadurch gekennzeichnet, dass**
a. der Spaltdetektor (8) einen in der Detektionsebene angeordneten Flächendetektor (53) aufweist, dem eine Spaltblende (14) vorgeschaltet ist, deren Spaltbreitenrichtung (9) parallel zur Längserstreckungsrichtung der Abbildung des Beleuchtungsstreifens (4) ausgerichtet ist, und/oder dass
b. der Spaltdetektor (8) einen in der Detektionsebene angeordneten Flächendetektor (53) aufweist, dem eine Spaltblende (14) vorgeschaltet ist, deren Spaltbreitenrichtung (9) parallel zur Längserstreckungsrichtung der Abbildung des Beleuchtungsstreifens (4) ausgerichtet ist, wobei der Flächendetektor (53) bezüglich seiner gesamten Sensorfläche aktiv geschaltet ist, und/oder dass
c. der Spaltdetektor (8) einen in der Detektionsebene angeordneten Flächendetektor (53) aufweist, dem eine Spaltblende (14) vorgeschaltet ist, deren Spaltbreitenrichtung (9) parallel zur Längserstreckungsrichtung der Abbildung des Beleuchtungsstreifens (4) ausgerichtet ist, wobei die Spaltblende als nicht-mechanisches Bauteil ausgeführt ist.

5. Verfahren nach Anspruch 4, **dadurch gekennzeichnet, dass**
a. der Spaltdetektor (8) in der Detektionsebene in Spaltbreitenrichtung (9) bewegt wird und/oder dass
b. Spaltdetektor (8) durch Verschieben der Spaltblende in Spaltbreitenrichtung (9) bewegt wird, und/oder dass
c. Spaltdetektor (8) durch Verschieben der Spaltblende bewegt wird.

6. Verfahren nach einem der Ansprüche 1 bis 5, **dadurch gekennzeichnet, dass**
a. das Beleuchtungslichtbündel (3) während des Detektierens in der Beleuchtungsebene (30) relativ zur Probe (1) bewegt wird und/oder dass
b. das Beleuchtungslichtbündel (3) während des Detektierens in der Beleuchtungsebene (30) mittels einer hinsichtlich des Ablenkwinkels einstellbaren Strahlablenkeinrichtung (34, 36) bewegt wird, und/oder dass
c. das Beleuchtungslichtbündel (3) während des Detektierens in der Beleuchtungsebene (30) senkrecht zur Ausbreitungsrichtung des Beleuchtungslichtbündels (3) bewegt wird, und/oder dass
d. das Beleuchtungslichtbündel (3) während des Detektierens in der Beleuchtungsebene (30) senkrecht zur Ausbreitungsrichtung des Beleuchtungslichtbündels (3) fortlaufend hin und her bewegt wird.

7. Verfahren nach Anspruch 6, **dadurch gekennzeichnet, dass**
a. der Spaltdetektor (8) in der Detektionsebene und das Beleuchtungslichtbündel (3) in der Beleuchtungsebene (30) gleichzeitig oder abwechselnd bewegt werden, und/oder dass
b. der Spaltdetektor (8) in der Detektionsebene und das Beleuchtungslichtbündel (3) in der Beleuchtungsebene (30) synchron bewegt werden.

8. Verfahren nach einem der Ansprüche 1 bis 7, **dadurch gekennzeichnet, dass**
a. der Kreuzungsbereich (11) der Abbildung des Beleuchtungsstreifens (4) in die Detektionsebene einerseits und des Spaltdetektors (8) andererseits einen Detektionsbereich definiert, der während des Detektierens bewegt wird, und/oder dass
b. der Kreuzungsbereich (11) der Abbildung des Beleuchtungsstreifens (4) in die Detektionsebene einerseits und des Spaltdetektors (8) andererseits einen Detektionsbereich definiert, der während des Detektierens entlang eines vorgegeben oder vorgebbaren Bewegungsmusters bewegt wird.

9. Verfahren nach einem der Ansprüche 1 bis 8, **dadurch gekennzeichnet, dass**
a. das Beleuchtungslichtbündel (3) als Lichtblatt ausgebildet ist, und/oder dass
b. das Beleuchtungslichtbündel (3) mittels einer Zylinderoptik derart geformt wird, dass es wenigstens im Bereich des Beleuchtungsstreifens (4) als Lichtblatt ausgebildet ist.

10. Verfahren nach einem der Ansprüche 1 bis 9, **dadurch gekennzeichnet, dass**
a. das Beleuchtungslichtbündel (3) innerhalb des Beleuchtungsstreifens (4) einen Fokus (13) aufweist, und/oder dass
b. das Beleuchtungslichtbündel (3) mittels eines Beleuchtungsobjektivs (2) derart fokussiert wird, dass das Beleuchtungslichtbündel (3) innerhalb des Beleuchtungsstreifens (4) einen Fokus aufweist.

11. Verfahren nach Anspruch 10, **dadurch gekennzeichnet, dass**
a. der Fokus (13) des Beleuchtungslichtbündels (3) während des Detektierens bewegt wird und/oder dass
b. der Fokus (13) des Beleuchtungslichtbündels (3) während des Detektierens durch Verändern der Länge des optischen Lichtweges des Beleuchtungslichtbündels (3) bewegt wird und/oder dass
c. der Kreuzungsbereich (11) der Abbildung des Beleuchtungsstreifens (4) in die Detektionsebene einerseits und des Spaltdetektors (8) andererseits einen Detektionsbereich definiert, der während des Detektierens entlang eines vorgegeben oder vorgebbaren Bewegungsmusters bewegt wird, wobei der Fokus (13) des Beleuchtungslichtbündels (3) synchron derart bewegt wird, dass das von dem mit dem Fokus (13) beleuchteten Probenbereich ausgehende Detektionslicht (51) stets innerhalb des Detektionsbereichs auf die Detektionsebene trifft.

12. Verfahren nach einem der Ansprüche 1 bis 11, **dadurch gekennzeichnet, dass**
a. zunächst eine Übersichtsabbildung der Probe (1) erzeugt wird und dass anschließend wenigstens ein interessierender Probenbereich (43, 44, 45, 52) festgelegt wird und dass das Beleuchtungslichtbündel (3) und der Spaltdetektor (8) so positioniert werden, dass das von dem interessierenden Probenbereich (43, 44, 45, 52) ausgehende Detektionslicht (51) innerhalb des Detektionsbereichs auf die Detektionsebene trifft, oder dass
b. zunächst eine Übersichtsabbildung der Probe (1) erzeugt wird und dass anschließend wenigstens ein interessierender Probenbereich (43, 44, 45, 52) festgelegt wird und dass der Fokus (13) des Beleuchtungslichtbündels (3) und der Spaltdetektor (8) so positioniert werden, dass der interessierende Probenbereich mit dem Fokus (13) beleuchtet wird und das von dem interessierenden Probenbereich (43, 44, 45, 52) ausgehende Detektionslicht (51) innerhalb des Detektionsbereichs auf die Detektionsebene trifft und/oder dass
c. zunächst eine dreidimensionale Übersichtsabbildung der Probe (1) erzeugt wird, indem die Probe (1) in unterschiedlichen Probenebenen beleuchtet wird, und dass anschließend wenigstens ein interessierender Probenbereich (43, 44, 45, 52) in einer der Probenebenen festgelegt wird und dass das Beleuchtungslichtbündel (3), insbesondere der Fokus (13) des Beleuchtungslichtbündels (3), und der Spaltdetektor (8) so positioniert werden, dass das von dem interessierenden Probenbereich (43, 44, 45, 52) ausgehende Detektionslicht (51) innerhalb des Detektionsbereichs auf die Detektionsebene trifft, und/oder dass
d. mehrere interessierende Bereiche (43, 44, 45, 52) festgelegt werden, die nacheinander und/oder fortlaufend in schneller Folge untersucht werden, oder dass
e. in unterschiedlichen Probenebenen mehrere interessierende Bereiche (43, 44, 45, 52) festgelegt werden, die nacheinander und/oder fortlaufend in schneller Folge untersucht werden.

13. Verfahren nach einem der Ansprüche 1 bis 12, **dadurch gekennzeichnet, dass** die Probe (1) in der Beleuchtungsebene (30) oder in einer anderen, insbesondere zur Beleuchtungsebene (30) parallelen, Beleuchtungsebene (30) entlang wenigstens eines weiteren Beleuchtungsstreifens (28) mit wenigstens einem weiteren Beleuchtungslichtbündel (27), das sich entlang des weiteren Beleuchtungsstreifens (28) ausbreitet, beleuchtet wird und das von dem weiteren Beleuchtungsstreifen (28) ausgehende weitere Detektionslicht (51) in die Detektionsebene abgebildet und von wenigstens einem weiteren Spaltdetektor (29) detektiert wird, wobei die Spaltbreitenrichtung (9) des weiteren Spaltdetektors (29) parallel zur Längserstreckungsrichtung der Abbildung des weiteren Beleuchtungsstreifens (28) in die Detektionsebene ausgerichtet ist.

14. Verfahren nach Anspruch 13, **dadurch gekennzeichnet, dass**
a. der Spaltdetektor (8) und der weitere Spaltdetektor Teile desselben Flächendetektors (53) sind und/oder dass
b. der Spaltdetektor (8) ein aktiv geschalteter Teil eines in der Detektionsebene angeordneten Flächendetektors (53) ist und dass der weitere Spaltdetektor ein anderer aktiv geschalteter Teil desselben Flächendetektors (53) ist.

15. Verfahren nach Anspruch 13 oder 14, **dadurch gekennzeichnet, dass** mehrere interessierende Bereiche (43, 44, 45, 52) festgelegt werden, die gleichzeitig beleuchtet werden, wobei das von den jeweils beleuchteten Beleuchtungsstreifen (4, 28) ausgehende Detektionslicht (51) gleichzeitig mittels der Spaltdetektoren (8, 29) detektiert wird.

16. Vorrichtung zum Untersuchen einer Probe (1), insbesondere zum Durchführen des Verfahrens nach einem der Ansprüche 1 bis 15, mit einer Beleuchtungsvorrichtung, die dazu ausgebildet ist, eine Probe (1) in einer Beleuchtungsebene (30) entlang eines Beleuchtungsstreifens (4) mit einem Beleuchtungslichtbündel (3) zu beleuchten, das sich entlang des Beleuchtungsstreifens (4) ausbreitet, und mit einer Detektionsoptik (5), die ein Detektionsobjektiv (6) aufweist und die dazu ausgebildet ist, das von dem Beleuchtungsstreifen (4) ausgehende Detektionslicht (51) in eine Detektionsebene, in der ein Detektor (7) angeordnet ist, zu fokussieren und so den Beleuchtungsstreifen (4) auf den Detektor (7) abzubilden, wobei der Detektor als Spaltdetektor (8) ausgebildet ist, **dadurch gekennzeichnet, dass** die Spaltbreitenrichtung (9) des Spaltdetektors (8) parallel zur Längserstreckungsrichtung der Abbildung des Beleuchtungsstreifens (4) in die Detektionsebene ausgerichtet ist, und der Spaltdetektor (8) in der Detektionsebene relativ zu dem einfallenden Detektionslicht (51) bewegbar ausgebildet ist.

## Claims

1. Method for examining a sample (1), wherein a sample (1) is illuminated in an illumination plane (30) along an illumination band (4) with an illumination light bundle (3) propagating along the illumination band (4), the illumination band (4) is imaged into a detection plane by focusing detection light (51) emanating from the illumination band (4) into the detection plane, and the detection light (51) is detected by means of a detector (7), wherein the detector is configured as a slit detector (8), **characterized in that** the slit width direction (9) of the slit detector (8) is aligned parallel to the direction of the longitudinal extension of the image (10) of the illumination band (4) in the detection plane, and the slit detector (8) is moved in the detection plane relative to the incident detection light (51).

2. The method according to claim 1, **characterized in that**
a. the slit detector (8) is part of a plane detector (53), and/or that
b. the slit detector (8) is the respective enabled part of a plane detector (53) arranged in the detection plane.

3. The method according to claims 1 or 2, **characterized in that**
a. the slit detector (8) is moved in the detection plane along the slit width direction (9), and/or that
b. the slit detector (8) is moved by successively enabling and disabling of respective adjacent parts of the plane detector (53) in the detection plane, and/or that
c. the slit detector (8) is moved by successively enabling and disabling of respective adjacent parts of the plane detector (53) in the detection plane along the slit width direction (9).

4. The method according to claim 1, **characterized in that**
a. the slit detector (8) includes a plane detector (53) arranged in the detection plane downstream of a slit orifice (14), the slit width direction (9) of which is aligned parallel to the direction of the longitudinal extension of the image of the illumination band (4), and/or that
b. the slit detector (8) includes a plane detector (53) arranged in the detection plane downstream of a slit orifice (14), the slit width direction (9) of which is aligned parallel to the direction of the longitudinal extension of the image of the illumination band (4), wherein the plane detector (53) is enabled with regard to its entire sensing surface, and/or that
c. the slit detector (8) includes a plane detector (53) arranged in the detection plane upstream of a slit orifice (14), the slit width direction (9) of which is aligned parallel to the direction of the longitudinal extension of the image of the illumination band (4), wherein the slight orifice is configured as a non-mechanical component.

5. The method according to claim 4, **characterized in that**
a. the slit detector (8) is moved within the detection plane along the slit width direction (9), and/or that
b. the slit detector (8) is moved by shifting the slit orifice in the slit width direction (9), and/or that
c the slit detector (8) is moved by shifting the slit orifice.

6. The method according to anyone of claims 1 to 5, **characterized in that**
a. the illumination light bundle (3) is moved relative to the sample (1) during the detection in the illumination plane (30), and/or that
b. the illumination light bundle (3) is moved by means of a beam deflector (34, 36) adjustable with respect to the deflection angle during the detection in the illumination plane (30), and/or that
c. the illumination light bundle (3) is moved perpendicularly to the propagation direction of the illumination light bundle (3) during the detection within the illumination plane (30), and/or that
d. the illumination light bundle (3) is continuously moved back and forth perpendicularly to the propagation direction of the illumination light bundle (3) during the detection in the illumination plane (30).

7. The method according to claim 6, **characterized in that**
a. the slit detector (8) in the detection plane and the illumination light bundle (3) in the illumination plane (30) are moved simultaneously or alternately, and/or that
b. the slit detector (8) in the detection plane and the illumination light bundle (3) in the illumination playing (30) are moved synchronously.

8. The method according to anyone of claims 1 to 7, **characterized in that**
a. the crossing region (11) of the image of the illumination band (4) in the detection plane on the one hand and of the slit detector (8) on the other hand defines a detection region that is moved during the detection, and/or that
b. the crossing region (11) of the image of the illumination band (4) in the detection plane on the one hand and of the slit detector (8) on the other hand defines a detection region moved along a movement pattern which is predetermined or can be predetermined during the detection..

9. The method according to anyone of claims 1 to 8, **characterized in that**
a. the illumination light bundle (3) is configured as a light sheet, and/or that
b. the illumination light bundle (3) is shaped by cylinder optics such that at least in the region of the illumination band (4) it is formed as a light sheet.

10. The method according to anyone of claims 1 to 9, **characterized in that**
a. the illumination light bundle (3) has a focus (13) within the illumination band (4), and/or that
b. the illumination light bundle (3) is focused by means of an illumination lens (2) such that the illumination light bundle (3) has a focus within the illumination band (4).

11. The method according to claim 10, **characterized in that**
a. the focus (13) of the illumination light bundle (3) is moved during the detection, and/or that
b. the focus (13) of the illumination light bundle (3) is moved during the detection by changing the length of the optical path of the illumination light bundle (3), and/or that
c. the crossing region (11) of the image of the illumination band (4) in the detection plane on the one hand and the slit detector (8) on the other hand defines a detection region which is moved during the detection along a movement pattern which is predetermined or can be predetermined, wherein the focus (13) of the illumination light bundle (3) is synchronously moved such that the detection light (51) emanating from the sample region illuminated with the focus (13) is always incident on the detection plane within the detection region.

12. The method according to anyone of claims 1 to 11, **characterized in that**
a. initially an overall image of the sample (1) is generated and subsequently at least one region of interest (43, 44, 45, 52) of the sample is specified and the illumination light bundle (3) and the slit detector (8) are positioned such that the detection light (51) emanating from the region of interest (43, 44, 45, 52) of the sample is incident on the detection plane within the detection region, or that
b. initially an overall image of the sample (1) is generated and subsequently at least one region of interest (43, 44, 45, 52) of the sample is specified and the focus (13) of the illumination light bundle (3) and the slit detector (8) are positioned such that the region of interest of the sample is illuminated with the focus (13) and the detection light (51) emanating from the region of interest (43, 44, 45, 52) of the sample it is incident on the detection plane within the detection region, and/or that
c. initially a three-dimensional overall image of the sample (1) is generated by illuminating the sample (1) in different layers of the sample and subsequently at least one region of interest (43, 44, 45, 52) of the sample is specified in one of the layers of the sample and the illumination light bundle (3), in particular the focus of the illumination light bundle (3), and the slit detector (8) are positioned such that the detection light (51) emanating from the region of interest (43, 44, 45, 52) of the sample is incident on the detection plane within the detection region, and/or that
d. a plurality of regions of interest (43, 44, 45, 52) are specified to be examined consecutively and/or continuously in rapid succession, or that
e. a plurality of regions of interest (43, 44, 45, 52) are specified in different layers of the sample to be examined consecutively and/or continuously in rapid succession.

13. The method according to anyone of claims 1 to 12, **characterized in that** the sample (1) is illuminated in the illumination plane (30) or in another illumination plane (30), in particular parallel to the illumination plane (30), along at least one further illumination band (28) with a further illumination light bundle (27) propagating along the further illumination band (28) and that the further detection light (51) emanating from the further illumination band (28) is imaged in the detection plane and detected by a further slit detector (29), wherein the slit width direction (9) of the further slit detector (29) is aligned parallel to the direction of the longitudinal extension of the image of the further illumination band (28) in the detection plane.

14. The method according to claim 13, **characterized in that**
a. the slit detector (8) and the further slit detector are parts of one and the same plane detector (53), and/or that
b. the slit detector (8) is an enabled part of a plane detector (53) arranged in the detection plane, and that the further slit detector is another enabled part of the same plane detector (53).

15. The method according to claims13 or 14, **characterized in that** a plurality of regions of interest (43, 44, 45, 52) are specified to be simultaneously illuminated, wherein the detection light (51) emanating from the respective illuminated illumination bands (4, 28) is simultaneously detected by means of the slit detectors (8, 29).

16. An apparatus for examining a sample (1), in particular for performing the method according to anyone of claims 1 to 15, comprising an illumination device configured to illuminate a sample (1) in an illumination plane (30) along an illumination band (4) with an illumination light bundle (3) propagating along the illumination band (4) and detection optics (5) including a detection lens (6) and configured to focus the detection light (51) emanating from the illuminating band (4) into a detection plane in which a detector (7) is arranged thus imaging the illumination band (4) onto the detector (7), wherein the detector is configured as a slit detector (8) **characterized in that** the slit width direction (9) of the slit detector (8) is aligned parallel to the direction of the longitudinal extension of the image of the illumination band (4) into the detection plane, and the slit detector (8) is configured to be movable relative to the incident detection light (51) in the detection plane.

## Revendications

1. Procédé d'examen d'un échantillon (1), dans lequel un échantillon (1) est éclairé dans un plan d'éclairage (30) le long d'une bande d'éclairage (4) avec un faisceau lumineux d'éclairage (3) qui s'étend le long de la bande d'éclairage (4), et dans lequel la bande d'éclairage (4) est représentée dans un plan de détection en focalisant dans le plan de détection une lumière de détection (51) émanant de la bande d'éclairage (4), et dans lequel la lumière de détection (51) est détectée avec un détecteur (7), le détecteur étant réalisé sous la forme d'un détecteur à fente (8), **caractérisé en ce que** le sens de largeur de fente (9) du détecteur à fente (8) est orienté dans le plan de détection parallèlement à la direction d'extension longitudinale de la représentation (10) de la bande d'éclairage (4) et le détecteur à fente (8) est déplacé dans le plan de détection par rapport à la lumière de détection (51) incidente.

2. Procédé selon la revendication 1, **caractérisé en ce que**
a. le détecteur à fente (8) fait partie d'un détecteur plan (53), et/ou **en ce que**
b. le détecteur à fente (8) est la partie placée de manière à être respectivement active d'un détecteur plan (53) agencé dans le plan de détection.

3. Procédé selon la revendication 1 ou 2, **caractérisé en ce que**
a. le détecteur à fente (8) est déplacé dans le plan de détection dans le sens de largeur de fente (9), et/ou **en ce que**
b. le détecteur à fente (8) est déplacé dans le plan de détection grâce à des commutations actives et des commutations inactives successives de parties respectivement adjacentes du détecteur plan (53), et/ou **en ce que**
c. le détecteur à fente (8) est déplacé dans le plan de détection dans le sens de largeur de fente (9) grâce à des commutations actives et des commutations inactives successives de parties respectivement adjacentes du détecteur plan (53).

4. Procédé selon la revendication 1, **caractérisé en ce que**
a. le détecteur à fente (8) présente un détecteur plan (53) agencé dans le plan de détection et en amont duquel est placé un diaphragme à fente (14) dont le sens de largeur de fente (9) est orienté parallèlement à la direction d'extension longitudinale de la représentation de la bande d'éclairage (4), et/ou **en ce que**
b. le détecteur à fente (8) présente un détecteur plan (53) agencé dans le plan de détection et en amont duquel est placé un diaphragme à fente (14) dont le sens de largeur de fente (9) est orienté parallèlement à la direction d'extension longitudinale de la représentation de la bande d'éclairage (4), dans lequel le détecteur plan (53) est placé de manière à être actif sur la totalité de sa surface de détection, et/ou **en ce que**
c. le détecteur à fente (8) présente un détecteur plan (53) agencé dans le plan de détection et en amont duquel est placé un diaphragme à fente (14) dont le sens de largeur de fente (9) est orienté parallèlement à la direction d'extension longitudinale de la représentation de la bande d'éclairage (4), dans lequel le diaphragme à fente est conçu comme un composant non mécanique.

5. Procédé selon la revendication 4, **caractérisé en ce que**
a. le détecteur à fente (8) est déplacé dans le plan de détection dans le sens de largeur de fente (9) et/ou **en ce que**
b. le détecteur à fente (8) est déplacé dans le sens de largeur de fente (9) grâce au déplacement du diaphragme à fente, et/ou **en ce que**
c. le détecteur à fente (8) est déplacé grâce au déplacement du diaphragme à fente.

6. Procédé selon l'une quelconque des revendications 1 à 5, **caractérisé en ce que**
a. le faisceau lumineux d'éclairage (3) est déplacé par rapport à l'échantillon (1) dans le plan d'éclairage (30) pendant la détection, et/ou **en ce que**
b. le faisceau lumineux d'éclairage (3) est déplacé dans le plan d'éclairage (30) pendant la détection au moyen d'un dispositif de déviation de faisceau (34, 36) dont l'angle de déviation peut être ajusté, et/ou **en ce que**
c. le faisceau lumineux d'éclairage (3) est déplacé dans le plan d'éclairage (30) pendant la détection perpendiculairement à la direction d'extension du faisceau lumineux d'éclairage (3), et/ou **en ce que**
d. le faisceau lumineux d'éclairage (3) est déplacé pendant la détection de manière continue d'avant en arrière dans le plan d'éclairage (30) perpendiculairement à la direction d'extension du faisceau lumineux d'éclairage (3).

7. Procédé selon la revendication 6, **caractérisé en ce que**
a. le détecteur à fente (8) est déplacé dans le plan de détection et, simultanément ou en alternance, le faisceau lumineux d'éclairage (3) est déplacé dans le plan d'éclairage (30), et/ou **en ce que**
b. le détecteur à fente (8) est déplacé dans le plan de détection et, de manière synchrone, le faisceau lumineux d'éclairage (3) est déplacé dans le plan d'éclairage (30).

8. Procédé selon l'une quelconque des revendications 1 à 7, **caractérisé en ce que**
a. la région de croisement (11) de la représentation de la bande d'éclairage (4) dans le plan de détection d'une part et du détecteur à fente (8) d'autre part définit une région de détection qui est déplacée pendant la détection, et/ou **en ce que**
b. la région de croisement (11) de la représentation de la bande d'éclairage (4) dans le plan de détection d'une part et du détecteur à fente (8) d'autre part définit une région de détection qui est déplacée pendant la détection le long d'un motif de déplacement prédéfini ou pouvant être prédéfini.

9. Procédé selon l'une quelconque des revendications 1 à 8, **caractérisé en ce que**
a. le faisceau lumineux d'éclairage (3) est réalisé sous la forme d'une nappe de lumière, et/ou **en ce que**
b. le faisceau lumineux d'éclairage (3) est formé au moyen d'une optique cylindrique de manière à prendre la forme d'une nappe de lumière au moins dans la région de la bande d'éclairage (4).

10. Procédé selon l'une quelconque des revendications 1 à 9, **caractérisé en ce que**
a. le faisceau lumineux d'éclairage (3) présente un foyer (13) à l'intérieur de la bande d'éclairage (4), et/ou **en ce que**
b. le faisceau lumineux d'éclairage (3) est focalisé au moyen d'un objectif d'éclairage (2) de telle manière que le faisceau lumineux d'éclairage (3) présente un foyer à l'intérieur de la bande d'éclairage (4).

11. Procédé selon la revendication 10, **caractérisé en ce que**
a. le foyer (13) du faisceau lumineux d'éclairage (3) est déplacé pendant la détection, et/ou **en ce que**
b. le foyer (13) du faisceau lumineux d'éclairage (3) est déplacé pendant la détection grâce à une modification de la longueur du trajet optique du faisceau lumineux d'éclairage (3), et/ou **en ce que**
c. la région de croisement (11) de la représentation de la bande d'éclairage (4) dans le plan de détection d'une part et du détecteur à fente (8) d'autre part définit une région de détection qui est déplacée pendant la détection le long d'un motif de déplacement prédéfini ou pouvant être prédéfini, dans lequel le foyer (13) du faisceau lumineux d'éclairage (3) est déplacé de manière synchrone de telle manière que la lumière de détection (51) émanant de la région d'échantillon éclairée par le foyer (13) frappe toujours le plan de détection à l'intérieur de la région de détection.

12. Procédé selon l'une quelconque des revendications 1 à 11, **caractérisé en ce que**
a. une représentation d'ensemble de l'échantillon (1) est d'abord générée et **en ce qu'**au moins une région d'échantillon d'intérêt (43, 44, 45, 52) est ensuite définie et **en ce que** le faisceau lumineux d'éclairage (3) et le détecteur à fente (8) sont positionnés de sorte que la lumière de détection (51) émanant de la région d'échantillon d'intérêt (43, 44, 45, 52) frappe le plan de détection à l'intérieur de la région de détection, ou **en ce que**
b. une représentation d'ensemble de l'échantillon (1) est d'abord générée et **en ce qu'**au moins une région d'échantillon d'intérêt (43, 44, 45, 52) est ensuite définie et **en ce que** le foyer (13) du faisceau lumineux d'éclairage (3) et le détecteur à fente (8) sont positionnés de sorte que la région d'échantillon d'intérêt est éclairée par le foyer (13) et que la lumière de détection (51) émanant de la région d'échantillon d'intérêt (43, 44, 45, 52) frappe le plan de détection à l'intérieur de la région de détection, et/ou **en ce que**
c. une représentation d'ensemble tridimensionnelle de l'échantillon (1) est d'abord générée en éclairant l'échantillon (1) dans des plans d'échantillon différents et **en ce qu'**au moins une région d'échantillon d'intérêt (43, 44, 45, 52) est ensuite définie dans un des plans d'échantillon, et **en ce que** le faisceau lumineux d'éclairage (3), en particulier le foyer (13) du faisceau lumineux d'éclairage (3) et le détecteur à fente (8) sont positionnés de sorte que la lumière de détection (51) émanant de la région d'échantillon d'intérêt (43, 44, 45, 52) frappe le plan de détection à l'intérieur de la région de détection, et/ou **en ce que**
d. plusieurs régions d'intérêt (43, 44, 45, 52), examinées en succession rapide de manière séquentielle et/ou continue, sont définies, ou **en ce que**
e. plusieurs régions d'intérêt (43, 44, 45, 52), examinées en succession rapide de manière séquentielle et/ou continue, sont définies dans des plans d'échantillon différents.

13. Procédé selon l'une quelconque des revendications 1 à 12, **caractérisé en ce que** l'échantillon (1) est éclairé dans le plan d'éclairage (30) ou dans un autre plan d'éclairage (30), en particulier parallèle au plan d'éclairage (30), le long d'au moins une autre bande d'éclairage (28) avec au moins un autre faisceau de lumière d'éclairage (27) qui s'étend le long de l'autre bande d'éclairage (28), et l'autre lumière de détection (51) émanant de l'autre bande d'éclairage (28) est représentée dans le plan de détection et est détectée par au moins un autre détecteur à fente (29), dans lequel le sens de largeur de fente (9) de l'autre détecteur à fente (29) est orienté dans le plan de détection parallèlement à la direction d'extension longitudinale de la représentation de l'autre bande d'éclairage (28).

14. Procédé selon la revendication 13, **caractérisé en ce que**
a. le détecteur à fente (8) et l'autre détecteur à fente font partie du même détecteur plan (53), et/ou **en ce que**
b. le détecteur à fente (8) est une partie placée de manière à être active d'un détecteur plan (53) agencé dans le plan de détection et **en ce que** l'autre détecteur à fente est une autre partie placée de manière à être active du même détecteur plan (53).

15. Procédé selon la revendication 13 ou 14, **caractérisé en ce que** plusieurs régions d'intérêt (43, 44, 45, 52) éclairées de manière simultanée sont définies, dans lequel la lumière de détection (51) émanant des bandes d'éclairage (4, 28) respectivement éclairées est détectée de manière simultanée au moyen des détecteurs à fente (8, 29).

16. Dispositif permettant d'examiner un échantillon (1), en particulier permettant de mettre en œuvre le procédé selon l'une quelconque des revendications 1 à 15, comprenant un dispositif d'éclairage conçu pour éclairer un échantillon (1) dans un plan d'éclairage (30) le long d'une bande d'éclairage (4) avec un faisceau lumineux d'éclairage (3) qui s'étend le long de la bande d'éclairage (4), et comprenant une optique de détection (5) présentant un objectif de détection (6) et conçue pour focaliser la lumière de détection (51) émanant de la bande d'éclairage (4) dans un plan de détection dans lequel est agencé un détecteur (7) et pour représenter ainsi la bande d'éclairage (4) sur le détecteur (7), dans lequel le détecteur est réalisé sous la forme d'un détecteur à fente (8), **caractérisé en ce que** le sens de largeur de fente (9) du détecteur à fente (8) est orienté parallèlement à la direction d'extension longitudinale de la représentation de la bande d'éclairage (4) dans le plan de détection, et le détecteur à fente (8) est agencé de manière à pouvoir être déplacé dans le plan de détection par rapport à la lumière de détection (51) incidente.
